# EUROPEAN PATENT APPLICATION

(11) **EP 4 783 693 A1**
(43) Date of publication of application: **29.07.2026**
(21) Application number: 23952738.5
(22) Date of filing: 22.09.2023
(51) Int. Cl.: H04W 72/0446

(54) **CONFIGURATION DETERMINATION METHOD AND APPARATUS, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: XU, Jing, Dongguan, Guangdong 523860 (KR)
(74) Representative: Penza, Giancarlo
(86) International application number: PCT/CN2023/120814
(87) International publication number: WO 2025/060086

(57) **Abstract**

Embodiments of the present application provide a configuration determination method and apparatus, a terminal device, and a network device. The method comprises: the terminal device determining to perform an operation using a first configuration on a waveband combination corresponding to a first type of time domain unit, and/or to perform an operation using a second configuration on a waveband combination corresponding to a second type of time domain unit, the waveband combination corresponding to the first type of time domain unit being configured with an uplink sub-band, and the waveband combination corresponding to the second type of time domain unit not being configured with an uplink sub-band; the first type of time domain unit comprises a downlink time domain unit and/or a flexible time domain unit, and the second type of time domain unit comprises a downlink time domain unit and/or a flexible time domain unit; and the waveband combination comprises multiple carriers.

## Description

### TECHNICAL FIELD

Embodiments of the present disclosure relate to the technical field of mobile communication, and in particular, to a method and an apparatus for determining a configuration, a terminal device, and a network device.

### BACKGROUND

Subband Full Duplex (SBFD) is a new duplex system. By dividing the uplink subband and the downlink subband in the same carrier, uplink transmission and downlink transmission are performed on the uplink subband and downlink subband respectively, so as to realize full duplex working mode.

At present, only the case of single carrier is considered for the application of the SBFD or Time Division Duplex (TDD) (i.e., non-SBFD). However, in the mobile communication system, in order to improve the communication performance of the system, multi-carrier technology is introduced. How to realize the application of SBFD and/or non-SBFD in multi-carrier system is a problem to be solved.

### SUMMARY

Embodiments of the present disclosure provide a method and an apparatus for determining a configuration, a terminal device, a network device, a chip, a computer-readable storage medium, a computer program product, and a computer program.

A method for determining a configuration provided by the embodiments of the present disclosure includes the following operation.

A terminal device determines to operate, by using the first configuration, on a band combination corresponding to the first type of time domain unit, and/or to operate, by using the second configuration, on the band combination corresponding to the second type of time domain unit. The band combination corresponding to the first type of time domain unit is configured with uplink subband(s), and the band combination corresponding to the second type of time domain unit is not configured with the uplink subband(s). The first type of time domain unit includes a downlink time domain unit and/or a flexible time domain unit. The second type of time domain unit includes a downlink time domain unit and/or a flexible time domain unit. The band combination includes multiple carriers.

A method for determining a configuration provided by the embodiments of the present disclosure includes the following operation.

A terminal device determines to operate, by using the first configuration, on a carrier corresponding to the first type of time domain unit, and/or to operate, by using the second configuration, on the carrier corresponding to the second type of time domain unit. The carrier corresponding to the first type of time domain unit is configured with uplink subband(s), and the carrier corresponding to the second type of time domain unit is not configured with the uplink subband(s). The first type of time domain unit includes a downlink time domain unit and/or a flexible time domain unit. The second type of time domain unit includes a downlink time domain unit and/or a flexible time domain unit. The carrier is any one of multiple carriers.

A method for determining a configuration provided by the embodiments of the present disclosure includes the following operation.

A network device sends the first configuration and/or the second configuration to a terminal device. The first configuration is used for the terminal device to operate on a band combination corresponding to the first type of time domain unit, and the second configuration is used for the terminal device to operate on the band combination corresponding to the second type of time domain unit. The band combination corresponding to the first type of time domain unit is configured with uplink subband(s), and the band combination corresponding to the second type of time domain unit is not configured with the uplink subband(s). The first type of time domain unit includes a downlink time domain unit and/or a flexible time domain unit. The second type of time domain unit includes a downlink time domain unit and/or a flexible time domain unit. The band combination includes multiple carriers.

A method for determining a configuration provided by the embodiments of the present disclosure includes the following operation.

A network device sends the first configuration and/or the second configuration to a terminal device. The first configuration is used for the terminal device to operate on a carrier corresponding to the first type of time domain unit, and the second configuration is used for the terminal device to operate on the carrier corresponding to the second type of time domain unit. The carrier corresponding to the first type of time domain unit is configured with the uplink subband(s), and the carrier corresponding to the second type of time domain unit is not configured with the uplink subband(s). The first type of time domain unit includes a downlink time domain unit and/or a flexible time domain unit. The second type of time domain unit includes a downlink time domain unit and/or a flexible time domain unit. The carrier is any one of multiple carriers.

An apparatus for determining a configuration provided by the embodiments of the present disclosure is applied to a terminal device. The apparatus includes a determining unit.

The determining unit is configured to determine to operate, by using the first configuration, on a band combination corresponding to the first type of time domain unit, and/or to operate, by using the second configuration, on the band combination corresponding to the second type of time domain unit. The band combination corresponding to the first type of time domain unit is configured with uplink subband(s), and the band combination corresponding to the second type of time domain unit is not configured with the uplink subband(s). The first type of time domain unit includes a downlink time domain unit and/or a flexible time domain unit. The second type of time domain unit includes a downlink time domain unit and/or a flexible time domain unit. The band combination includes multiple carriers.

An apparatus for determining a configuration provided by the embodiments of the present disclosure is applied to a terminal device. The apparatus includes a determining unit.

The determining unit is configured to determine to operate, by using the first configuration, on a carrier corresponding to the first type of time domain unit, and/or to operate, by using the second configuration, on the carrier corresponding to the second type of time domain unit. The carrier corresponding to the first type of time domain unit is configured with an uplink subband, and the carrier corresponding to the second type of time domain unit is not configured with an uplink subband. The first type of time domain unit includes a downlink time domain unit and/or a flexible time domain unit. The second type of time domain unit includes a downlink time domain unit and/or a flexible time domain unit. The carrier is any one of multiple carriers.

An apparatus for determining a configuration provided by the embodiments of the present disclosure is applied to a network device. The apparatus includes a sending unit.

The sending unit is configured to send the first configuration and/or the second configuration to a terminal device. The first configuration is used for the terminal device to operate on a band combination corresponding to the first type of time domain unit, and the second configuration is used for the terminal device to operate on the band combination corresponding to the second type of time domain unit. The band combination corresponding to the first type of time domain unit is configured with an uplink subband, and the band combination corresponding to the second type of time domain unit is not configured with an uplink subband. The first type of time domain unit includes a downlink time domain unit and/or a flexible time domain unit. The second type of time domain unit includes a downlink time domain unit and/or a flexible time domain unit. The band combination includes multiple carriers.

An apparatus for determining a configuration provided by the embodiments of the present disclosure is applied to a network device. The apparatus includes a sending unit.

The sending unit is configured to send the first configuration and/or the second configuration to a terminal device. The first configuration is used for the terminal device to operate on a carrier corresponding to the first type of time domain unit, and the second configuration is used for the terminal device to operate on the carrier corresponding to the second type of time domain unit. The carrier corresponding to the first type of time domain unit is configured with an uplink subband, and the carrier corresponding to the second type of time domain unit is not configured with an uplink subband. The first type of time domain unit includes a downlink time domain unit and/or a flexible time domain unit. The second type of time domain unit includes a downlink time domain unit and/or a flexible time domain unit. The carrier is any one of multiple carriers.

The terminal device provided by the embodiments of the present disclosure includes a processor and a memory. The memory is configured to store a computer program, and the processor is configured to invoke and execute the computer program stored in the memory to perform the above-described method for determining a configuration.

The network device provided by the embodiments of the present disclosure includes a processor and a memory. The memory is configured to store a computer program, and the processor is configured to invoke and execute the computer program stored in the memory to perform the above-described method for determining a configuration.

The chip provided by the embodiments of the present disclosure is used for implementing the above-described method of determining a configuration.

Specifically, the chip includes a processor for invoking and executing a computer program from a memory to cause a device on which the chip is mounted to perform the above-described method for determining a configuration.

The computer-readable storage medium provided by the embodiments of the present disclosure is configured to store a computer program that causes a computer to execute the above-described method for determining a configuration.

A computer program product provided by the embodiments of the present disclosure includes computer program instructions that cause a computer to perform the above-described method for determining a configuration.

The computer program provided by the embodiments of the present disclosure causes a computer to perform the above-described method for determining the configuration when it is run on the computer.

According to the above technical solutions, in the multi-carrier (i.e., multiple carriers) system, it is defined that the terminal device uses the first configuration to operate on the carrier or band combination corresponding to the first type of time domain unit, and/or uses the second configuration to operate on the carrier or band combination corresponding to the second type of time domain unit. Since the carrier or band combination corresponding to the first type of time domain unit is configured with an uplink subband, the first type of time domain unit is a SBFD time domain unit. Since the carrier or band combination corresponding to the second type of time domain unit is not configured with an uplink subband, the second type of time domain unit is a non-SBFD time domain unit. Therefore, the application of SBFD and/or non-SBFD in multi-carrier system is achieved.

### BRIEF DESCRIPTION OF THE DRAWINGS

The accompanying drawings described herein are intended to provide a further understanding of the present disclosure and constitute a part of the present disclosure, and the schematic embodiments of the present disclosure and the description thereof are intended to explain the present disclosure, and do not constitute an undue limitation of the present disclosure.
FIG. 1 is a schematic diagram of an application scenario according to an embodiment of the present disclosure.
FIG. 2 is a schematic diagram of frequency domain resources of an SBFD system.
FIG. 3 is a schematic diagram of radio frequency filtering of single carrier according to an embodiment of the present disclosure.
FIG. 4 is a schematic diagram of an antenna configuration according to an embodiment of the present disclosure.
FIG. 5 is the first schematic diagram of multi-carrier radio frequency filtering according to an embodiment of the present disclosure.
FIG. 6 is the second schematic diagram of multi-carrier radio frequency filtering according to an embodiment of the present disclosure.
FIG. 7 is the first schematic flowchart of a method for determining a configuration according to an embodiment of the present disclosure.
FIG. 8 is the second schematic flowchart of a method for determining a configuration according to an embodiment of the present disclosure.
FIG. 9 is the third schematic flowchart of a method for determining a configuration according to an embodiment of the present disclosure.
FIG. 10 is the fourth schematic flowchart of a method for determining a configuration according to an embodiment of the present disclosure.
FIG. 11 is the fifth schematic flowchart of a method for determining a configuration according to an embodiment of the present disclosure.
FIG. 12 is the sixth flowchart of a method for determining a configuration according to an embodiment of the present disclosure.
FIG. 13 is a schematic diagram of an application example 1 according to an embodiment of the present disclosure.
FIG. 14 is a schematic diagram of an application example 2 according to an embodiment of the present disclosure.
FIG. 15 is the first schematic diagram of a structural composition of an apparatus for determining a configuration according to an embodiment of the present disclosure.
FIG. 16 is the second schematic diagram of the structure composition of the apparatus for determining the configuration according to an embodiment of the present disclosure.
FIG. 17 is the third schematic diagram of the structural composition of the apparatus for determining the configuration according to an embodiment of the present disclosure.
FIG. 18 is the fourth schematic diagram of the structural composition of the apparatus for determining the configuration according to an embodiment of the present disclosure.
FIG. 19 is a schematic structural diagram of a communication device according to an embodiment of the present disclosure.
FIG. 20 is a schematic structural diagram of a chip according to an embodiment of the present disclosure.
FIG. 21 is a schematic block diagram of a communication system according to an embodiment of the present disclosure.

### DETAILED DESCRIPTION

Hereinafter, the technical solutions in the embodiments of the present disclosure will be described with reference to the accompanying drawings in the embodiments of the present disclosure. It is apparent that the described embodiments are part of the embodiments of the present disclosure, but not all the embodiments. Based on the embodiments in the present disclosure, all other embodiments obtained by those skilled in the art without creative work fall within the scope of protection of the present disclosure.

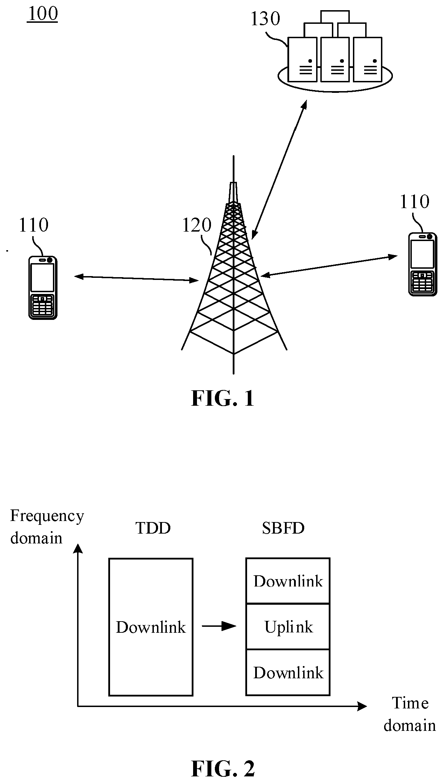

FIG. 1 is a schematic diagram of an application scenario according to an embodiment of the present disclosure.

As illustrated in FIG. 1, a communication system 100 may include terminal devices 110 and a network device 120. The network device 120 may communicate with the terminal devices 110 through an air interface. Multi-service transmission is supported between the terminal device 110 and the network device 120.

It should be understood that the embodiments of the present disclosure are only illustrated with reference to the communication system 100, but the embodiments of the present disclosure are not limited thereto. That is, the technical solutions of the embodiments of the present disclosure may be applied to various communication systems, such as a Long Term Evolution (LTE) system, an LTE Time Division Duplex (TDD), a Universal Mobile Telecommunication System (UMTS), an Internet of Things (IoT) system, a Narrow Band Internet of Things (NB-IoT) system, an enhanced Machine-Type Communications (eMTC) system, 5G communication system (also referred to as New Radio (NR) communication system), Beyound 5G (B5G) communication system, 6G communication system or future communication system, etc.

In the communication system 100 illustrated in FIG. 1, the network device 120 may be an access network device that communicates with the terminal device 110. The access network device may provide communication coverage for a particular geographic area and may communicate with a terminal device 110 (for example, UE) located within that coverage area.

The network device 120 may be an Evolutional Node B (eNB or eNodeB) in a Long Term Evolution (LTE) system, a Next Generation Radio Access Network (NG RAN) device, a base station (gNB) in an NR system, a radio controller in a Cloud Radio Access Network (CRAN), a relay station, an access point, an in-vehicle device, a wearable device, a hub, a switch, a bridge, a router, or a network device in a future evolved Public Land Mobile Network (PLMN).

The terminal device 110 may be any terminal device including, but not limited to, a terminal device that uses a wired or wireless connection to the network device 120 or other terminal devices.

For example, the terminal device 110 may refer to an access terminal, User Equipment (UE), a subscriber unit, a subscriber station, a mobile station, a mobile station, a remote station, a remote terminal, a mobile device, a user terminal, a terminal, a wireless communication device, a user agent, or a user device. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device with wireless communication functionality, a computing device or other processing device connected to a wireless modem, an in-vehicle device, a wearable device, a terminal device in a 5G network, or a terminal device in a future evolution network, or the like.

The terminal device 110 may be used for device-to-device (D2D) communication.

The wireless communication system 100 may further include a core network device 130 that communicates with the base station, and the core network device 130 may be a 5G Core (5GC) device, for example, an Access and Mobility Management Function (AMF), another example, an Authentication Server Function (AUSF), another example, a User Plane Function (UPF), another example, a Session Management Function (SMF). Alternatively, the core network device 130 may also be an Evolved Packet Core (EPC) device of an LTE network, for example, a Session Management Function + Core Packet Gateway (SMF + PGW-C) device. It should be understood that the SMF + PGW-C may simultaneously implement functions capable of the SMF and the PGW-C. In the process of network evolution, the core network devices may be called by other names, or a new network entity may be formed by dividing the functions of the core network, which is not limited by the embodiments of the present disclosure.

The connection can be established among the respective functional units in the communication system 100 through next generation (NG) network interfaces to achieve communication.

For example, the terminal device establishes an air interface connection with the access network device through the NR interface, for transmitting user plane data and control plane signaling. The terminal device may establish a control plane signaling connection with the AMF through the NG interface 1 (referred to as N1 for short). The access network device, such as a next generation radio access base station (gNB), may establish a user plane data connection with the UPF through an NG interface 3 (referred to as N3 for short). The access network device may establish a control plane signaling connection with the AMF through the NG interface 2 (referred to as N2 for short). The UPF may establish a control plane signaling connection with the SMF through the NG interface 4 (referred to as N4 for short). The UPF may interact user plane data with the data network through the NG interface 6 (referred to as N6 for short). The AMF may establish a control plane signaling connection with the SMF through the NG interface 11 (referred to as N11 for short). The SMF may establish a control plane signaling connection with the PCF through the NG interface 7 (referred to as N7 for short).

FIG. 1 exemplarily illustrates one base station, one core network device, and two terminal devices. Alternatively, the wireless communication system 100 may include multiple base stations and another number of terminal devices may be included within the coverage range of each base station, which is not limited by the embodiments of the present disclosure.

It should be noted that FIG. 1 only exemplarily illustrates a system to which the present disclosure is applied, and of course, the methods shown in the embodiments of the present disclosure may also be applied to other systems. Further, the terms "system" and "network" are often used interchangeably herein. Herein, the term "and/or" is only used for describing an association relationship between association objects, and means that there may be three relationships. For example, A and/or B may mean that A exists alone, A and B exist simultaneously, and B exists alone. In addition, the character "/" herein generally represent that there is an "or" relationship between association objects. It should also be understood that the "indication" mentioned in the embodiments of the present disclosure may be a direct indication, an indirect indication, or be used for describing an association relationship. For example, A indicates B, which may mean that A directly indicates B, for example, B may be acquired by A, which may also mean that A indicates B indirectly, for example A indicates C, and B may be acquired through C, which may represent that there is an association relationship between A and B. It should also be understood that "correspondence" mentioned in the embodiments of the present disclosure may indicate that there is a direct correspondence or indirect correspondence between the two objects, there is an association relationship between the two objects, or the two objections have a relationship between indicating and being indicated, configuring and being configured, or the like. It should also be understood that the "predefined" or "predefined rules" mentioned in the embodiments of the present disclosure may be implemented by storing corresponding codes, tables, or other methods for indicating relevant information in advance in devices (e.g., including the terminal device and the network device), and specific implementations thereof are not limited in the present disclosure. For example, pre-definition may refer to definition in the protocol. It should also be understood that in the embodiments of the present disclosure, the "protocol" may refer to a standard protocol in the communication field, which may include, for example, an LTE protocol, an NR protocol, and related protocols applied in future communication systems, which is not limited in the present disclosure.

In order to facilitate understanding of the technical solutions of the embodiments of the present disclosure, the related technologies of the embodiments of the present disclosure are described below, and the related technologies below may be, as optional solutions, arbitrarily combined with the technical solutions of the embodiments of the present disclosure, and all of them belong to the scope of protection of the embodiments of the present disclosure.

### 1. Uplink subband of downlink time domain unit

SBFD is also X Division Duplex (XDD). SBFD is a new duplex system, which can realize full duplex working mode by dividing uplink subband and downlink subband, in the same carrier, that are not overlapped, and performing uplink transmission and downlink transmission on the uplink subband and downlink subband respectively. In some solutions, SBFD may be implemented by dividing an uplink subband and a downlink subband on a downlink time domain unit or a flexible time domain unit within the same Time Division Duplex (TDD) carrier. In the SBFD, since frequency domain resources corresponding to the same downlink time domain unit or flexible time domain unit include an uplink subband and a downlink subband, downlink transmission and uplink transmission can be simultaneously performed on different subbands of the same downlink time domain unit or flexible time domain unit. The SBFD is mainly used on the network device side. Specifically, the network device can simultaneously perform downlink transmission and uplink reception on different subbands of the same downlink time domain unit or flexible time domain unit. The terminal device side still uses TDD, that is, only downlink reception or uplink transmission is supported in the same time domain unit.

In some embodiments, as illustrated in FIG. 2, in TDD, all frequency domain resources corresponding to a downlink time domain unit are used for downlink transmission. However, in the SBFD, frequency domain resources corresponding to the downlink time domain unit or the flexible time domain unit are divided into an uplink subband and a downlink subband. The uplink subband is used for uplink transmission and the downlink subband is used for downlink transmission.

The time domain unit in the TDD may be referred to as a non-SBFD time domain unit (or a conventional time domain unit). The time domain unit in the TDD may be a downlink time domain unit, such as a downlink symbol, a downlink subslot, a downlink slot, or a downlink subframe, and frequency domain resources corresponding to the downlink time domain unit are all downlink resources. The time domain unit in the TDD may be an uplink time domain unit, such as an uplink symbol, an uplink subslot, an uplink slot, or an uplink subframe, and frequency domain resources corresponding to the uplink time domain unit belong to uplink resources. The time domain unit in the TDD may be a flexible time domain unit, such as a flexible symbol, a flexible subslot, a flexible slot or a flexible subframe, and the frequency domain resources corresponding to the flexible time domain unit may be flexibly set as downlink resources or uplink resources. It should be noted that, unless otherwise specified, the non-SBFD time domain unit described hereinafter refers to a downlink time domain unit and/or a flexible time domain unit in TDD.

The time domain unit in the SBFD may be referred to as the SBFD time domain unit, such as a SBFD symbol, a SBFD subslot, a SBFD slot or a SBFD subframe. In some cases, the SBFD time domain unit may also be described as a downlink time domain unit, such as a downlink symbol, a downlink subslot, a downlink slot, or a downlink subframe. However, it should be clarified that the frequency domain resources corresponding to the downlink time domain unit are divided into an uplink subband and a downlink subband. In some cases, the SBFD time domain unit may also be described as a flexible time domain unit, such as a flexible symbol, a flexible subslot, a flexible slot or a flexible subframe. Howevere, it should be clarified that the frequency domain resources corresponding to the flexible time domain unit are divided into an uplink subband and a downlink subband. The distribution of the uplink subband and the downlink subband in the frequency domain may have a variety of ways. As one implementation method, an uplink subband is located between two downlink subbands.

In the single carrier system, the configurations on the non-SBFD time domain unit and the SBFD time domain unit are different. The configuration on the non-SBFD time domain unit may be referred to as the configuration corresponding to the non-SBFD (or the conventional configuration), and the configuration on the SBFD time domain unit may be referred to as the configuration corresponding to the SBFD (or the configuration specific to the SBFD or the configuration specific to the SBFD time-domain unit). The above configuration includes a Power domain configuration, a Spatial domain configuration, a Channel State Information (CSI) reporting configuration, and the like. The Power domain configuration may be an uplink power configuration, and the Spatial domain configuration may be a beam/spatial relation configuration. In addition, since the transmission direction on the non-SBFD time domain unit is downlink or uplink, and the transmission direction on the SBFD time domain unit includes downlink and uplink, a guard period is required between the non-SBFD time domain unit and the SBFD time domain unit, and the switching between the uplink transmission and downlink transmission is realized through this guard period.

### 2. Uplink power control (referred to as uplink power control)

Uplink power control refers to controlling the transmitting power of uplink signals (uplink transmitting power for short). The purpose is to make the received power of uplink signals on the network device side meet the demodulation requirements without interfering with other cells. Uplink power control includes open-loop power control and closed-loop power control. Open-loop power control mainly assists the terminal device in determining uplink transmitting power by configuring target received power and road loss compensation. Closed-loop power control mainly assists the terminal device in adjusting uplink transmitting power by configuring power adjustment amount in real time. Examples of uplink signals that require uplink power control include a Physical Uplink Shared Channel (PUSCH), a Sounding Reference Signal (SRS), a Physical Uplink Control Channel (PUCCH), and the like.

### 3. Multi-antenna technology

The multi-antenna technology includes spatial multiplexing, spatial diversity, beamforming, and precoding. The details are as follows.

### Spatial multiplexing and spatial diversity

Multiple-Input Multiple-Output (MIMO) technology includes spatial multiplexing technology and spatial diversity technology. By using the spatial multiplexing technology, the information transmission rate can be multiplied without increasing the bandwidth, thus greatly improving the spectrum utilization rate. At the transmitting end, the high-rate data stream is divided into multiple lower-rate subdata streams, and different subdata streams are transmitted on the same band on different transmitting antennas. If the spatial subchannels formed between the antenna arrays of the transmitting end and the receiving end are sufficiently different, that is, an additional spatial dimension can be provided beyond the time domain and the frequency domain, so that signals transmitted on different transmitting antennas may be distinguished from each other, the receiving end can thus distinguish these parallel subdata streams without expending additional time-frequency resources. By using spatial multiplexing technology, channel capacity can be improved greatly under the condition of high signal-to-noise ratio, and the spatial multiplexing technology can be used under the condition of "open-loop", that is, the transmitting end cannot obtain channel information. In the spatial diversity technology, multiple transmission paths provided by multiple antennas at the transmitting end or receiving end are used to send the same information, so as to enhance the transmission quality of information.

### Beamforming

In the beamforming technology, multiple antennas are used to generate a directional beam, and the energy is concentrated in the direction to be transmitted, so as to increase signal quality and reduce interference with other signals. The beam may be combined with cell splitting and cell clustering, and used in the wireless short-distance transmission system together with millimeter wave high-frequency band to concentrate signal strength in a specific direction and a specific user group to achieve reliable and high-speed signal transmission.

### Precoding

Precoding technology mainly improves the performance by transforming the characteristics of the channel. Precoding technology is a technology that the system preprocesses the transmitted signal, which is essentially a process of matching the channel. Taking the downlink as an example, precoding means that after obtaining CSI, the network device calculates a precoding matrix to preprocess the transmitted signal, so that the channel state can be better matched, and the purposes of reducing or even eliminating interference between signals, improving the stability of the transmission link and increasing the channel capacity are achieved.

### 4. CSI feedback technology

CSI feedback technology is a technology in which the terminal device feeds back the CSI of the downlink channel to the network device, so that the network device can select an appropriate Modulation and Coding Scheme (MCS) for the transmission of the downlink channel, thereby reducing the Block Error Rate (BLER) of the downlink channel. The CSI includes a Channel Quality Indicator (CQI), a Precoding Matrix Indicator (PMI), a CSI reference signal resource indicator (CSI-RS Resource Indicator, CRI), an SS/PBCH Block Resource Indicator (SSBRI), a Layer Indicator (LI), a Rank Indicator (RI), a Layer 1 Reference Signal Received Power (L1-RSRP), and the like. The time-frequency domain resources required for CSI transmission are controlled by the network device. The CQI, PMI, CRI, SSBR, LI, RI, and L1-RSRP are greatly related to the number of transmitting antennas and transmitting power of the network device. Therefore, when the transmitting antennas and/or transmitting power of the network device change, the terminal device needs to perform corresponding CSI feedback.

### 5. Switching period

It takes a period of time for the communication device to switch between sending a signal and receiving a signal, and in order to avoid overlapping of the time of sending the signal and receiving the signal, usually a guard period (i.e., a switching period) is required between sending the signal and receiving the signal, within which the communication device switches from sending the signal to receiving the signal, or from receiving the signal to sending the signal. For the network device side, sending the signal corresponds to downlink sending, and receiving the signal corresponds to uplink reception. For the terminal device, sending the signal corresponds to uplink sending, and receiving the signal corresponds to downlink reception.

Here, downlink sending/reception refers to sending/reception of a downlink signal or a downlink channel, and may be collectively referred to as downlink transmission. Uplink sending/reception refers to sending/reception of an uplink signal or an uplink channel, and may be collectively referred to as uplink transmission.

In the mobile communication system, in order to improve the communication performance of the system, multi-carrier technology is introduced, but in the above-described related technology, only the application of SBFD in the single carrier system is specified, but the application of SBFD in the multi-carrier system is not specified. Therefore, the following technical solutions according to the embodiments of the present disclosure are proposed. In the technical solutions of the embodiments of the present disclosure, the application of the SBFD in the multi-carrier system is specified, so that the SBFD can be widely used.

In order to facilitate understanding of the technical solutions of the embodiments of the present disclosure, the technical solutions of the present disclosure will be described in detail below with reference to specific embodiments. The above related technologies may be arbitrarily combined with the technical solutions of the embodiments of the present disclosure as optional solutions, and all of them belong to the scope of protection of the embodiments of the present disclosure. Embodiments of the present disclosure include at least some of the following.

In single-carrier SBFD system, a carrier is divided into uplink subband and downlink subband. Because uplink subband and downlink subband have different transmission directions, there is uplink-downlink cross-interference between uplink subband and downlink subband.

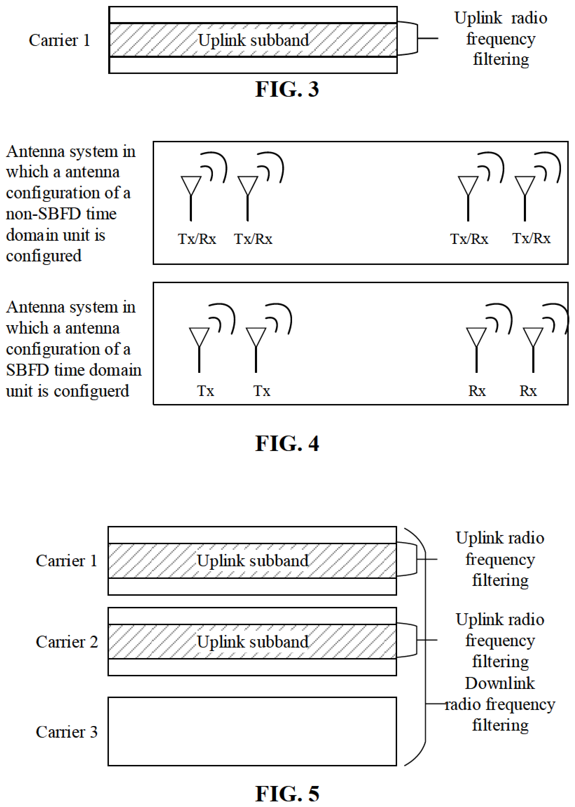

In order to reduce interference between subbands, a radio frequency filter may be provided on the network device side. As illustrated in FIG. 3, an uplink radio frequency filter is provided for the carrier 1. The uplink radio frequency filter corresponds to the uplink reception of the network device, and is used to realize the uplink radio frequency filtering. Specifically, the network device may use the uplink radio frequency filter to perform uplink radio frequency filtering on the carrier 1, so as to filter uplink subband part from the carrier 1. The bandwidth of the uplink radio frequency filtering is the same as that of the uplink subband. For example, if the bandwidth of the uplink subband is bandwidth 1 and the bandwidth of the uplink radio frequency filtering is also bandwidth 1, then the uplink subband part with bandwidth 1 may be filtered out from carrier 1 through uplink radio frequency filtering. Through uplink radio frequency filtering, uplink-downlink cross-interference may be reduced. In addition, a downlink radio frequency filter may be provided for the carrier 1, and the downlink radio frequency filter corresponds to the downlink sending of the network device, and is used to realize the downlink radio frequency filter. Specifically, the network device may send the entire carrier by using the downlink radio frequency filter, and the bandwidth of the downlink radio frequency filter is the same as that of the carrier.

In order to reduce the interference between the subbands, the method for isolating the sending antenna and receiving antenna may also be used, that is, different antennas are used for downlink sending and uplink reception of the network device, and a certain distance is maintained between the antenna used for downlink sending and the antenna used for uplink reception, which can reduce uplink-downlink cross interference. As illustrated in FIG. 4, in the antenna system in which the antenna configuration of the non-SBFD time domain unit (or the conventional time domain unit) is configured, all four antennas of the network device are used for downlink transmission or uplink reception (i.e., Tx/Rx in FIG. 4). In the antenna system in which the antenna configuration of the SBFD time domain unit is configured, in order to reduce uplink and downlink cross-interference, the four antennas of the network device are divided into two groups, one group of antennas is used for downlink sending (i.e. Tx in FIG. 4), and the other group of antennas is used for uplink reception (i.e. Rx in FIG. 4). A group of antennas used for downlink sending in the network device may be referred to as a downlink antenna system, and the downlink antenna system includes one or more downlink sending antennas. As illustrated in FIG. 4, the downlink antenna system includes two downlink sending antennas (i.e., Tx in FIG. 4). A group of antennas for uplink reception in the network device may be referred to as an uplink antenna system, and the uplink antenna system includes one or more uplink reception antennas. As illustrated in FIG. 4, the uplink antenna system includes two uplink reception antennas (i.e., Rx in FIG. 4).

In a multi-carrier system, the multiple carriers are used for communication between a terminal device and a network device.

In some embodiments, each carrier of the multiple carriers corresponds to an independent uplink radio frequency filter and an independent uplink antenna system. Specifically, each carrier of the multiple carriers corresponds to an independent uplink radio frequency filter and an independent uplink antenna system on the network device side. In some embodiments, such a mode of multiple carriers may be referred to as the first mode, and the first mode means that each carrier of the multiple carriers corresponds to an independent uplink radio frequency filter and an independent uplink antenna system on the network device side.

In some embodiments, the multiple carriers correspond to a unified downlink radio frequency filtering and a unified downlink antenna system on the network device side. In other embodiments, each carrier of the multiple carriers corresponds to an independent downlink radio frequency filter and an independent downlink antenna system on the network device side.

For the first mode, the network device needs multiple sets of uplink radio frequency filter and uplink antenna system, and each set of uplink radio frequency filter and the uplink antenna system corresponds to a carrier. The uplink antenna system is used for the network device to receive the carrier, and the uplink radio frequency filter is used for the network device to filter out the uplink subband part(s) from the received carriers. Each carrier of the multiple carriers may be independently configured with an uplink subband. A part of the multiple carriers may be configured with an uplink subband, all of the carriers may be configured with an uplink subband, or all of the carriers may not be configured with an uplink subband.

In some embodiments, as illustrated in FIG. 5, the multiple carriers include a carrier 1, a carrier 2, and a carrier 3, and the three carriers correspond to an independent uplink radio frequency filter and an independent uplink antenna system, respectively. The carrier 1 corresponds to the uplink radio frequency filter 1 and the uplink antenna system 1, the carrier 2 corresponds to the uplink radio frequency filter 2 and the uplink antenna system 2, and the carrier 3 corresponds to the uplink radio frequency filter 3 and the uplink antenna system 3. Each carrier of the three carriers may be independently configured with an uplink subband. In FIG. 5, the carrier 1 is configured with an uplink subband, the carrier 2 is configured with an uplink subband, and the carrier 3 is not configured with an uplink subband. Corresponding uplink radio frequency filtering may be performed on the carrier 1 by the uplink radio frequency filter 1 corresponding to the carrier 1, and corresponding uplink radio frequency filtering may be performed on the carrier 2 by the uplink radio frequency filter 2 corresponding to the carrier 2.

In the first mode, if a carrier corresponding to a time domain unit (the time domain unit is a downlink time domain unit or a flexible time domain unit) is configured with an uplink subband, the time domain unit is the first type of time domain unit, and the first type of time domain unit may be an SBFD time domain unit, such as an SBFD symbol, an SBFD subslot, an SBFD slot or an SBFD subframe. If the carrier corresponding to a time domain unit (the time domain unit is a downlink time domain unit or a flexible time domain unit) is not configured with an uplink subband, the time domain unit is the second type of time domain unit, and the second type of time domain unit may be a non-SBFD time domain unit (or a conventional time domain unit), such as a non-SBFD symbol, a non-SBFD subslot, a non-SBFD slot or a non-SBFD subframe. It may be understood that the carrier corresponding to the SBFD time domain unit is configured with an uplink subband, but the carrier corresponding to the non-SBFD time domain unit is not configured with an uplink subband.

In other embodiments, the multiple carriers correspond to a uniform uplink radio frequency filter and a uniform uplink antenna system. Specifically, the multiple carriers correspond to a unified uplink radio frequency filter and a unified uplink antenna system on the network device side. In some embodiments, this mode of multiple carriers may be referred to as the second mode, and the second mode means that the multiple carriers correspond to a unified uplink radio frequency filter and a unified uplink antenna system on the network device side.

In some embodiments, the multiple carriers correspond to a unified downlink radio frequency filtering and a unified downlink antenna system on the network device side. In other embodiments, each carrier of the multiple carriers corresponds to an independent downlink radio frequency filter and an independent downlink antenna system on the network device side.

For the second mode, the network device only needs a set of uplink radio frequency filter and uplink antenna system, and the hardware cost of the device is low. A set of uplink radio frequency filter and uplink antenna system corresponds to multiple carriers, the uplink antenna system is used for receiving multiple carriers, and the uplink radio frequency filter is used for filtering out uplink subband part(s) from the multiple carriers. Here, multiple carriers corresponding to a set of uplink radio frequency filter and uplink antenna system may be referred to as one band combination. In the band combination, only one carrier is configured with an uplink subband, or more than one carrier may be configured with uplink subband(s), but the carriers configured with the uplink subbands may be continuous. From another perspective, the band combination is configured with one uplink subband, and the uplink subband is located in one carrier or in multiple continuous carriers, and the bandwidth of the uplink radio frequency filtering is the bandwidth of the uplink subband.

It should be noted that "the carriers are continuous" means that there are no frequency domain resources for transmission between the carriers, in particular, frequency domain resources with different transmission directions. When there is a guard period or a period reserved by the operator when allocating carriers between carriers, the carriers may be regarded as continuous.

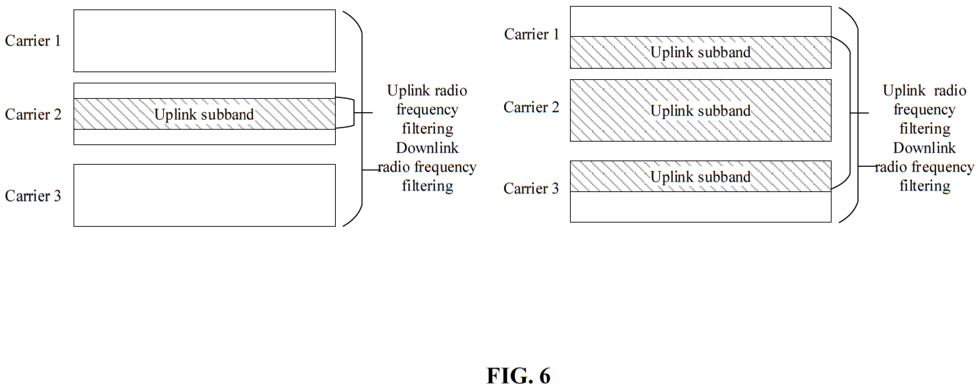

In some embodiments, as illustrated in FIG. 6, the multiple carriers include carrier 1, carrier 2, and carrier 3, and the three carriers correspond to (or share) a unified uplink radio frequency filter and a unified uplink antenna system. These three carriers form a band combination. Only one carrier in the band combination is configured with an uplink subband. For example, carrier 2 in the figure on the left is configured with an uplink subband, and uplink radio frequency filtering may be performed on carrier 2 through a unified uplink radio frequency filter. Alternatively, more than one (for example, three) carriers in the band combination are configured with uplink subbands and the carriers configured with uplink subbands are continuous, and uplink radio frequency filtering may be performed on carrier 1, carrier 2, and carrier 3 through a unified uplink radio frequency filter.

In the second mode, if a band combination corresponding to a time domain unit (the time domain unit is a downlink time domain unit or a flexible time domain unit) is configured with an uplink subband, the time domain unit is the first type of time domain unit. The first type of time domain unit may be an SBFD time domain unit, such as an SBFD symbol, an SBFD subslot, an SBFD slot or an SBFD subframe. If a band combination corresponding to a time domain unit (the time domain unit is a downlink time domain unit or a flexible time domain unit) is not configured with an uplink subband, the time domain unit is the second type of time domain unit, and the second type of time domain unit may be a non-SBFD time domain unit (or a conventional time domain unit), such as a non-SBFD symbol, a non-SBFD subslot, a non-SBFD slot or a non-SBFD subframe. It may be understood that the band combination corresponding to the SBFD time domain unit is configured with the uplink subband, and the band combination corresponding to the non-SBFD time domain unit is not configured with the uplink subband.

It should be noted that the time domain unit described in the embodiments of the present disclosure may be a subframe, a slot, a subslot or a symbol.

It should be noted that the subband described in the embodiments of the present disclosure is composed of multiple frequency domain units, and the frequency domain units are, for example, a Resource Block (RB), a Physical Resource Block (PRB), a Resource Block Group (RBG), a Physical Resource Block Group (PRG), or the like.

It should be noted that more understanding of the first type of time domain unit and the second type of time domain unit described in the following embodiments of the present disclosure may be made with reference to the above-described related description.

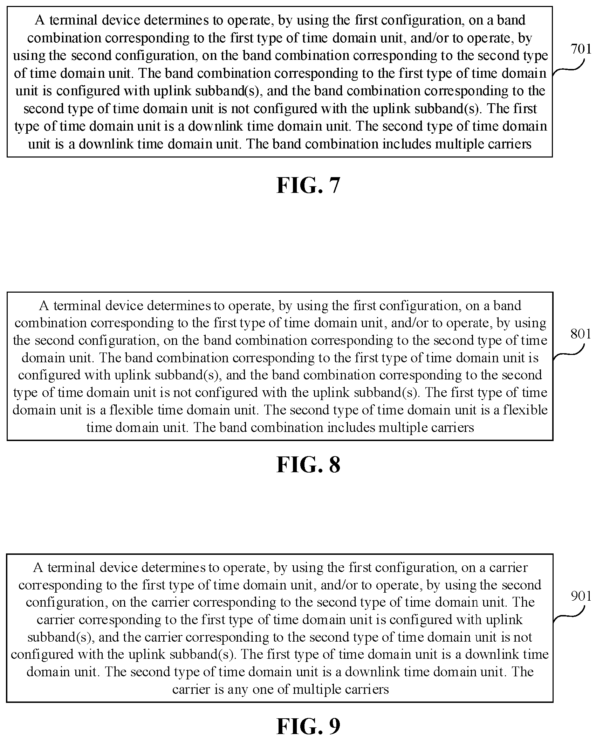

FIG. 7 is a schematic flowchart of a method for determining a configuration according to an embodiment of the present disclosure. As illustrated in FIG. 7, the method includes the following operation.

In operation 701, a terminal device determines to operate, by using the first configuration, on the band combination corresponding to the first type of time domain unit, and/or to operate, by using the second configuration, on the band combination corresponding to the second type of time domain unit. The band combination corresponding to the first type of time domain unit is configured with uplink subband(s), and the band combination corresponding to the second type of time domain unit is not configured with an uplink subband. The first type of time domain unit is a downlink time domain unit. The second type of time domain unit is a downlink time domain unit. The band combination includes multiple carriers.

The technical solutions of the embodiments of the present disclosure are applied to a multi-carrier system. In the multi-carrier system, multiple carriers are used for communication between a terminal device and a network device.

In some embodiments, the multiple carriers correspond to a unified uplink radio frequency filter and a unified uplink antenna system on the network device side. This case may be referred to as the second mode of multi-carrier. For the second mode, the network device only needs a set of uplink radio frequency filter and uplink antenna system, and the hardware cost of the device is low. A set of uplink radio frequency filter and uplink antenna system corresponds to multiple carriers. The uplink antenna system is used for the network device to receive the multiple carriers, and the uplink radio frequency filter is used for the network device to filter out the uplink subband part(s) from the received multiple carriers. Here, multiple carriers corresponding to a set of uplink radio frequency filter and uplink antenna system may be referred to as one band combination. In the second mode, the terminal device determines to operate, by using the first configuration, on the band combination corresponding to the first type of time domain unit, and/or to operate, by using the second configuration, on the band combination corresponding to the second type of time domain unit. Further understanding of the "second mode" may be made with reference to the foregoing related description. For the second mode, respective carriers of the multiple carriers are interrelated, that is, respective carriers in the band combination are interrelated, and this association is embodied in that respective carriers in the band combination are operated by using the first configuration or operated by using the second configuration, so that respective carriers in the band combination may correspond to a unified uplink radio frequency filter and a unified uplink antenna system on the network device side. Since the multiple carriers correspond to a unified uplink radio frequency filter and a unified uplink antenna system on the network device side, the hardware cost on the network device side is low, the existing single carrier system may be compatible by the network device, and the upgrade cost of the network device is low.

It should be noted that the multiple carriers correspond to a unified uplink radio frequency filter on the network device side, which means that each carrier of the multiple carriers is filtered by the same uplink radio frequency filter on the network device side.

In a case that each carrier of the multiple carriers is filtered by the same uplink radio frequency filter on the network device side, the network device only needs to configure one uplink radio frequency filter, which effectively saves the hardware cost of the device.

It should be noted that multiple carriers correspond to a unified uplink antenna system on the network device side, which means that each carrier of the multiple carriers is received by the same uplink antenna system on the network device side. The uplink antenna system herein includes one or more uplink reception antennas, and the uplink antenna system is for the network device to receive multiple carriers.

Here, the terminal device determines to operate, by using the first configuration, on the band combination corresponding to the first type of time domain unit, which specifically means that the terminal device determines to operate, by using the first configuration, on each carrier of the band combination corresponding to the first type of time domain unit. The first configurations used on different carriers may be independent or unified.

Here, the terminal device determines to operate, by using the second configuration, on the band combination corresponding to the second type of time domain unit, which specifically means that the terminal device determines to operate, by using the second configuration, on each carrier of the band combination corresponding to the second type of time domain unit. The second configurations used on different carriers may be independent or unified.

In the above solution, each carrier in the band combination is operated by using the same configuration, so that each carrier in the band combination may correspond to a unified uplink radio frequency filter and a unified uplink antenna system on the network device side. Since each carrier of the multiple carriers corresponds to a unified uplink radio frequency filter and a unified uplink antenna system on the network device side, the hardware cost on the network device side is low, and the existing single carrier system may be compatible by the network device, and the upgrade cost of the network device is low.

In some embodiments, the band combination includes carrier 1, carrier 2, and carrier 3, and the first configurations or the second configurations used on different carriers may be independent. For the carrier 1, configuration 11 (i.e., the first configuration) or configuration 21 (i.e., the second configuration) is used. For the carrier 2, configuration 12 (i.e., the first configuration) or configuration 22 (i.e., the second configuration) is used. For the carrier 3, configuration 13 (i.e., the first configuration) or configuration 23 (i.e., the second configuration) is used. If the band combination is configured with the uplink subband(s), the terminal device operates, by using the configuration 11, on the carrier 1, operates, by using the configuration 12, on the carrier 2, and operates, by using the configuration 13, on the carrier 3. If the band combination is not configured with the uplink subband, the terminal device operates, by using the configuration 21, on the carrier 1, operates, by using configuration 22, on the carrier 2, and operates, by using the configuration 23, on the carrier 3.

In some embodiments, the band combination includes carrier 1, carrier 2, and carrier 3, the first configurations or the second configurations used on different carriers may be unified. The configuration 1 (i.e., the first configuration) or configuration 2 (i.e., the second configuration) is uniformly used for carrier 1, carrier 2, and carrier 3. If the band combination is configured with uplink subband(s), the terminal device operates, by using the configuration 1, on the carrier 1, the carrier 2, and the carrier 3. If the band combination is not configured with the uplink subband, the terminal device operates, by using the configuration 2, on the carrier 1, the carrier 2, and the carrier 3.

The "configuration" described in the embodiments of the present disclosure includes at least one of the following: an uplink power configuration, a CSI reporting configuration, or a spatial relation configuration. Accordingly, the "operating" described in the embodiments of the present disclosure includes at least one of the following: determining an uplink sending power according to the uplink power configuration, and using the uplink sending power to send an uplink signal; performing CSI measurement according to the CSI reporting configuration, or performing CSI measurement and CSI reporting; or determining an uplink sending beam according to the spatial relation configuration, and sending an uplink signal by using the uplink sending beam.

In some embodiments, if at least one carrier in the band combination corresponding to the first type of time domain unit is configured with uplink subband(s), the terminal device determines that the band combination corresponding to the first type of time domain unit is configured with the uplink subband(s), and/or, if all carriers in the band combination corresponding to the second type of time domain unit are not configured with an uplink subband, the terminal device determines that the band combination corresponding to the second type of time domain unit is not configured with the uplink subband.

Here, for a downlink time domain unit, if at least one carrier in the band combination corresponding to the downlink time domain unit is configured with uplink subband(s), the terminal device determines that the band combination corresponding to the downlink time domain unit is configured with the uplink subband(s) and/or the downlink time domain unit belongs to the first type of time domain unit. If all carriers in the band combination corresponding to the downlink time domain unit are not configured with an uplink subband, the terminal device determines that the band combination corresponding to the downlink time domain unit is not configured with the uplink subband and/or the downlink time domain unit belongs to the second type of time domain unit.

In some embodiments, the band combination includes carrier 1, carrier 2, and carrier 3. If at least one carrier among carrier 1, carrier 2, and carrier 3 is configured with uplink subband(s), it may be considered that the band combination is configured with uplink subband(s). If none of the carrier 1, the carrier 2, and the carrier 3 are configured with an uplink subband, it may be considered that the band combination is not configured with an uplink subband.

Here, in a case that the number of carriers configured with the uplink subbands in the band combination is greater than one, the carriers configured with the uplink subbands in the band combination are continuous. Further understanding of the "band combination" may be made with reference to the foregoing related description. Further understanding of "the carriers are continuous" may be made with reference to the foregoing related description.

In some embodiments, the mode of the multiple carriers is stipulated by a protocol. For example, it is stipulated by the protocol that the mode of the multiple carriers is the second mode described above. In other embodiments, the mode of the multiple carriers is configured by the network device. For example, the mode of multiple carriers configured by the network device is the second mode described above.

The terminal device determines the mode of the multiple carriers. If the mode of the multiple carriers is the second mode, the terminal device determines to operate, by using the first configuration, on the band combination corresponding to the first type of time domain unit, and/or to operate, by using the second configuration, on the band combination corresponding to the second type of time domain unit.

In the embodiments of the present disclosure, the first configuration is a configuration corresponding to SBFD, or a configuration specific to SBFD, or a configuration specific to the first type of time domain unit (such as an SBFD time domain unit). The second configuration is a configuration corresponding to non-SBFD, or a conventional configuration, or a configuration specific to the second type of time domain unit (such as a non-SBFD time domain unit or a conventional time domain unit). The first configuration is at least partially different from the second configuration.

In some embodiments, the first configuration includes at least one of following: the first uplink power configuration, the first CSI reporting configuration, or the first spatial relation configuration.

The terminal device performs uplink sending on the band combination configured with the uplink subband(s) according to the first uplink power configuration. In some embodiments, the first uplink power configuration includes at least one following parameter: the first target received power or a first open-loop power adjustment amount. The terminal device may determine the uplink sending power or adjust the uplink sending power according to the first uplink power configuration, and send an uplink signal according to the uplink sending power.

The terminal device performs CSI reporting (or CSI feedback) on the band combination configured with the uplink subband(s) according to the first CSI reporting configuration. In some embodiments, the first CSI reporting configuration includes at least one following parameter: the first antenna port, the first signal sending power, or the first number of antenna panels. The terminal device performs CSI measurement and corresponding CSI reporting according to the first CSI reporting configuration.

Here, the CSI measurement means that the terminal device measures the signal quality of the downlink reference signal sent by the network device, and determines the CSI of the downlink channel according to the signal quality of the downlink reference signal.

The terminal device performs uplink sending on the band combination configured with the uplink subband(s) according to the first spatial relation configuration. Here, the first spatial relation is configured to determine a beam used for uplink sending, and the terminal device uses the beam for uplink sending.

In some embodiments, the second configuration includes at least one of following: the second uplink power configuration, the second CSI reporting configuration, or the second spatial relation configuration.

The terminal device performs uplink sending on a band combination that is not configured with the uplink subband according to the second uplink power configuration. In some embodiments, the second uplink power configuration includes at least one of following parameter: the second target received power or the second open-loop power adjustment amount. The terminal device may determine the uplink sending power or adjust the uplink sending power according to the second uplink power configuration, and send an uplink signal according to the uplink sending power.

The terminal device performs CSI reporting (or CSI feedback) on the band combination that is not configured with the uplink subband according to the second CSI reporting configuration. In some embodiments, the second CSI reporting configuration includes at least one of following parameter: the second antenna port, the second signal sending power, or the second number of antenna panels. The terminal device performs CSI measurement and corresponding CSI reporting according to the second CSI reporting configuration.

The terminal device performs uplink transmission on a band combination that is not configured with the uplink subband according to the second spatial relation configuration. Here, the second spatial relation is configured to determine a beam used for uplink sending, and the terminal device uses the beam for uplink sending.

In some embodiments, the network device uses different antenna configurations for the first type of time domain unit (e.g., SBFD time domain unit) and the second type of time domain unit (e.g., non-SBFD time domain unit) (which may be seen in the related description for FIG. 4). Therefore, the terminal device uses different uplink power configurations for the first type of time domain unit and the second type of time domain unit, which may make up for the configuration difference between the reception antennas of the network device, and ensure uplink coverage. For the first type of time domain unit, the network device configures a small number of reception antennas (for example, the number of reception antennas for the first type of time domain unit is half of the number of reception antennas for the second type of time domain unit). Accordingly, the network device needs to configure a greater target received power (that is, the first uplink power configuration) to make up for the problem of the small number of reception antennas, thereby ensuring uplink coverage. For the second type of time domain unit, the network device configures a larger number of reception antennas. Accordingly, the network device may configure a lower target received power (that is, the second uplink power configuration) to reduce the energy consumption of the terminal device.

In some embodiments, the network device uses different antenna configurations for the first type of time domain unit (e.g., SBFD time domain unit) and the second type of time domain unit (e.g., non-SBFD time domain unit) (which may be seen in the related description in FIG. 4). Therefore, the terminal device uses different CSI reporting configurations for the first type of time domain unit and the second type of time domain unit, which can make up for the configuration difference between the reception antennas of the network device. For the first type of time domain unit, the network device configures a small number of reception antennas (for example, the number of reception antennas of the first type of time domain unit is half of the number of reception antennas for the second type of time domain unit). Accordingly, the network device needs to configure a small number of antenna ports and a small number of antenna panels (that is, the first CSI reporting configuration) to adapt to the problem of a small number of reception antennas. For the second type of time domain unit, the network device configures a larger number of reception antennas. Accordingly, the network device may configure a larger number of antenna ports and a larger number of antenna panels (that is, the second CSI reporting configuration) to adapt to the problem of a larger number of reception antennas.

In some embodiments, if one time domain unit of two adjacent time domain units belongs to the first type of time domain unit and the other time domain unit of two adjacent time domain units belongs to the second type of time domain unit, the terminal device determines that there is a switching period between the two adjacent time domain units, and the switching period is used to perform switching between uplink transmission and downlink transmission. If both the two adjacent time domain units belong to the first type of time domain unit or the second type of time domain unit, the terminal device determines that there is no switching period between the two adjacent time domain units.

In some embodiments, if the band combination corresponding to one downlink time domain unit of two adjacent downlink time domain units is configured with uplink subband(s) and the band combination corresponding to the other downlink time domain unit of two adjacent downlink time domain units is not configured with an uplink subband, the terminal device determines that there is a switching period between the two adjacent downlink time domain units, and the switching period is used to perform switching between uplink transmission and downlink transmission. It may be ensured by the switching period that the terminal device has sufficient time to switch between the uplink transmission and downlink transmission. If both the band combinations corresponding to the two adjacent downlink time domain units are configured with uplink subband(s) or are not configured with an uplink subband, the terminal device determines that there is no switching period between the two adjacent downlink time domain units.

FIG. 8 is the second schematic flowchart of a method for determining a configuration according to an embodiment of the present disclosure. As illustrated in FIG. 8, the method includes the following operation.

In operation 801, a terminal device determines to operate, by using the first configuration, on the band combination corresponding to the first type of time domain unit, and/or to operate, by using the second configuration, on the band combination corresponding to the second type of time domain unit. The band combination corresponding to the first type of time domain unit is configured with uplink subband(s), and the band combination corresponding to the second type of time domain unit is not configured with an uplink subband. The first type of time domain unit is a flexible time domain unit. The second type of time domain unit is a flexible time domain unit. The band combination includes multiple carriers.

The technical solutions of the embodiments of the present disclosure are applied to a multi-carrier system. In the multi-carrier system, multiple carriers are used for communication between a terminal device and a network device.

In some embodiments, the flexible time domain unit may be configured for downlink transmission, and the flexible time domain unit for downlink transmission may be understood as a downlink time domain unit.

Here, for the operation 801, the reference is made to the description related to the operation 701 in FIG. 7, and the operation 801 may be realized by replacing the "downlink time domain unit" with the "flexible time domain unit" in the description related to the operation 701.

FIG. 9 is the third schematic flowchart of a method for determining a configuration according to an embodiment of the present disclosure. As illustrated in FIG. 9, the method includes the following operation.

In operation 901, a terminal device determines to operate, by using the first configuration, on a carrier corresponding to the first type of time domain unit, and/or to operate, by using the second configuration, on the carrier corresponding to the second type of time domain unit. The carrier corresponding to the first type of time domain unit is configured with an uplink subband, and the carrier corresponding to the second type time domain unit is not configured with an uplink subband. The first type of time domain unit is a downlink time domain unit. The second type of time domain unit is a downlink time domain unit. The carrier is any one of multiple carriers.

The technical solutions of the embodiments of the present disclosure are applied to a multi-carrier system. In the multi-carrier system, multiple carriers are used for communication between a terminal device and a network device.

In some embodiments, each carrier of the multiple carriers corresponds to an independent uplink radio frequency filter and an independent uplink antenna system on the network device side. This case may be referred to as the first mode of multi-carrier. For the first mode, the network device needs multiple sets of uplink radio frequency filter and uplink antenna system, each set of uplink radio frequency filter and the uplink antenna system corresponds to a carrier, the uplink antenna system is used for the network device to receive the carrier, and the uplink radio frequency filter is used for the network device to filter out the uplink subband part(s) from the received carrier. Each carrier of the multiple carriers may be independently configured with uplink subband(s), and a part of the multiple carriers may be configured with uplink subband(s), all of the carriers may be configured with uplink subbands, or all of the carriers may not be configured with an uplink subband. In the first mode, for any one of the multiple carriers, the terminal device determines to operate, by using the first configuration, on the carrier corresponding to the first type of time domain unit, and/or to operate, by using the second configuration, on the carrier corresponding to the second type of time domain unit. Further understanding of the "first mode" may be made with reference to the foregoing related description. For the first mode, each carrier of the multiple carriers may independently configure uplink subband(s), and the configuration used by each carrier is more flexible, which can improve system performance.

It should be noted that each carrier of the multiple carriers corresponds to an independent uplink radio frequency filter, which means that different carriers of the multiple carriers are filtered by different uplink radio frequency filters.

In a case that different carriers of multiple carriers are filtered by different uplink radio frequency filters, the network device needs to configure multiple uplink radio frequency filters, and different carriers are filtered by different uplink radio frequency filters, and each carrier may be independently configured with uplink subband(s), and the configuration of uplink subbands is more flexible.

It should be noted that each carrier of the multiple carriers corresponds to an independent uplink antenna system, which means that different carriers of the multiple carriers are received by using different uplink antenna systems. The uplink antenna system herein includes one or more uplink reception antennas, and the uplink antenna system is used for the network device to receive the carrier.

In the above solution, each carrier in the multiple carriers may use a different configuration, which depends on whether the carrier is configured with uplink subband(s). If the carrier is configured with the uplink subband, the first configuration is used for the carrier. If the carrier is not configured with the uplink subband, the second configuration is used for the carrier. Therefore, each carrier in the multiple carriers may be flexibly configured.

The "configuration" described in the embodiments of the present disclosure includes at least one of the following: an uplink power configuration, a CSI reporting configuration, or a spatial relation configuration. Accordingly, the "operation" described in the embodiments of the present disclosure includes at least one of the following: determining an uplink sending power according to the uplink power configuration, and using the uplink sending power to send an uplink signal; performing CSI measurement according to the CSI reporting configuration; or performing CSI measurement and CSI reporting; or determining an uplink sending beam according to the spatial relation configuration, and sending an uplink signal by using the uplink sending beam.

Here, for a downlink time domain unit, if the carrier corresponding to the downlink time domain unit is configured with an uplink subband, the terminal device determines that the downlink time domain unit belongs to the first type of time domain unit. If the carrier corresponding to the downlink time domain unit is not configured with the uplink subband, the terminal device determines that the downlink time domain unit belongs to the second type of time domain unit.

In some embodiments, the mode of the multiple carriers is stipulated by a protocol. For example, it is stipulated by the protocol that the mode of the multiple carriers is the first mode described above. In other embodiments, the mode of the multiple carriers is configured by the network device. For example, the mode of multiple carriers configured by the network device is the first mode described above.

The terminal device determines the mode of the multiple carriers. If the mode of the multiple carriers is the first mode, for any one of the multiple carriers, the terminal device determines to operate, by using the first configuration, on the carrier corresponding to the first type of time domain unit, and/or determines, to operate, by using the second configuration, on the carrier corresponding to the second type of time domain unit.

In the embodiments of the present disclosure, the first configuration is a configuration corresponding to SBFD, or a configuration specific to SBFD, or a configuration specific to the first type of time domain unit (such as an SBFD time domain unit). The second configuration is a configuration corresponding to non-SBFD, or a conventional configuration, or a configuration of the second type of time domain unit (such as a non-SBFD time domain unit or a conventional time domain unit). The first configuration is at least partially different from the second configuration.

In some embodiments, the first configuration includes at least one of following: the first uplink power configuration, the first CSI reporting configuration, or the first spatial relation configuration.

The terminal device performs uplink sending on a carrier configured with uplink subband(s) according to the first uplink power configuration. In some embodiments, the first uplink power configuration includes at least one following parameter: the first target received power or a first open-loop power adjustment amount. The terminal device may determine the uplink sending power or adjust the uplink sending power according to the first uplink power configuration, and send an uplink signal according to the uplink sending power.

The terminal device performs CSI reporting (or CSI feedback) on the carrier configured with the uplink subband(s) according to the first CSI reporting configuration. In some embodiments, the first CSI reporting configuration includes at least one following parameter: the first antenna port, the first signal sending power, or the first number of antenna panels. The terminal device performs CSI measurement and corresponding CSI reporting according to the first CSI reporting configuration.

Here, the CSI measurement means that the terminal device measures the signal quality of the downlink reference signal sent by the network device, and determines the CSI of the downlink channel according to the signal quality of the downlink reference signal.

The terminal device performs uplink transmission on the carrier configured with uplink subband(s) according to the first spatial relation configuration. Here, the first spatial relation is configured to determine a beam used for uplink sending, and the terminal device uses the beam for uplink sending.

In some embodiments, the second configuration includes at least one of following: the second uplink power configuration, the second CSI reporting configuration, or the second spatial relation configuration.

The terminal device performs uplink sending on a carrier that is not configured with the uplink subband according to the second uplink power configuration. In some embodiments, the second uplink power configuration includes at least one of following parameter: the second target received power or the second open-loop power adjustment amount. The terminal device may determine the uplink sending power or adjust the uplink sending power according to the second uplink power configuration, and send an uplink signal according to the uplink sending power.

The terminal device performs CSI reporting (or CSI feedback) on the carrier that is not configured with the uplink subband according to the second CSI reporting configuration. In some embodiments, the second CSI reporting configuration includes at least one of following parameter: the second antenna port, the second signal sending power, or the second number of antenna panels. The terminal device performs CSI measurement and corresponding CSI reporting according to the second CSI reporting configuration.

The terminal device performs uplink transmission on a carrier that is not configured with the uplink subband according to the second spatial relation configuration. Here, the second spatial relation is configured to determine a beam used for uplink sending, and the terminal device uses the beam for uplink sending.

In some embodiments, the network device uses different antenna configurations for the first type of time domain unit (e.g., SBFD time domain unit) and the second type of time domain unit (e.g., non-SBFD time domain unit) (which may be seen in the related description for FIG. 4). Therefore, the terminal device uses different uplink power configurations for the first type of time domain unit and the second type of time domain unit, which may make up for the configuration difference between the reception antennas of the network device, and ensure uplink coverage. For the first type of time domain unit, the network device configures a small number of reception antennas (for example, the number of reception antennas for the first type of time domain unit is half of the number of reception antennas of the second type of time domain unit). Accordingly, the network device needs to configure a greater target received power (that is, the first uplink power configuration) to make up for the problem of the small number of reception antennas, thereby ensuring uplink coverage. For the second type of time domain unit, the network device configures a larger number of reception antennas. Accordingly, the network device may configure a lower target received power (that is, the second uplink power configuration) to reduce the energy consumption of the terminal device.

In some embodiments, the network device uses different antenna configurations for the first type of time domain unit (e.g., SBFD time domain unit) and the second type of time domain unit (e.g., non-SBFD time domain unit) (which may be seen in the related description in FIG. 4). Therefore, the terminal device uses different CSI reporting configurations for the first type of time domain unit and the second type of time domain unit, which can make up for the configuration difference between the reception antennas of the network device. For the first type of time domain unit, the network device configures a small number of reception antennas (for example, the number of reception antennas of the first type of time domain unit is half of the number of reception antennas for the second type of time domain unit). Accordingly, the network device needs to configure a small number of antenna ports and a small number of antenna panels (that is, the first CSI reporting configuration) to adapt to the problem of a small number of reception antennas. For the second type of time domain unit, the network device configures a larger number of reception antennas. Accordingly, the network device may configure a larger number of antenna ports and a larger number of antenna panels (that is, the second CSI reporting configuration) to adapt to the problem of a larger number of reception antennas.

In some embodiments, if one time domain unit of two adjacent time domain units belongs to the first type of time domain unit and the other time domain unit of the two adjacent time domain units belongs to the second type of time domain unit, the terminal device determines that there is a switching period between the two adjacent time domain units, and the switching period is used to perform switching between uplink transmission and downlink transmission. If both the two adjacent time domain units belong to the first type of time domain unit or the second type of time domain unit, the terminal device determines that there is no switching period between the two adjacent time domain units.

In some embodiments, if a carrier corresponding to one downlink time domain unit of two adjacent downlink time domain units is configured with an uplink subband and the carrier corresponding to the other downlink time domain unit of the two adjacent downlink time domain units is not configured with an uplink subband, the terminal device determines that there is a switching period between the two adjacent downlink time domain units, and the switching period is used to perform switching between the uplink transmission and downlink transmission, and it may be ensured by the switching period that the terminal device has sufficient time to switch between the uplink transmission and downlink transmission. If both carriers corresponding to the two adjacent downlink time domain units are configured with an uplink subband or are not configured with an uplink subband, the terminal device determines that there is no switching period between the two adjacent downlink time domain units.

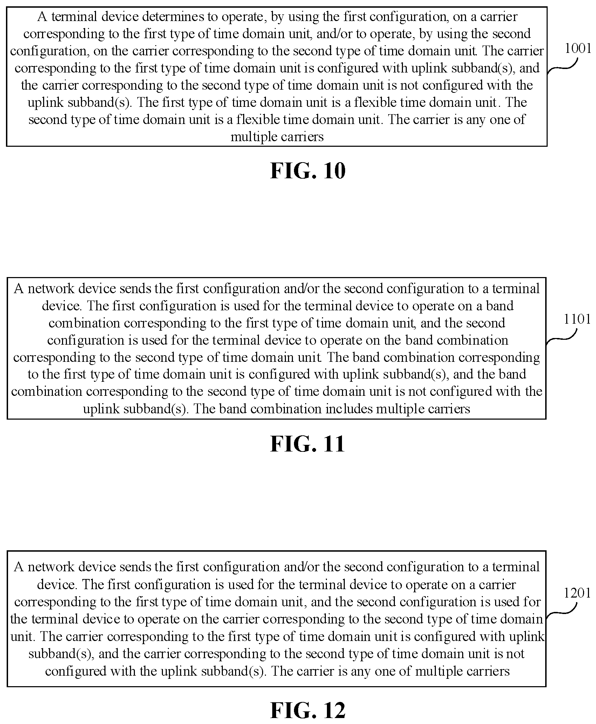

FIG. 10 is the fourth schematic flowchart of a method for determining a configuration according to an embodiment of the present disclosure. As illustrated in FIG. 10, the method includes the following operation.

In operation 1001, a terminal device determines to operate, by using the first configuration, on a carrier corresponding to the first type of time domain unit, and/or to operate, by using the second configuration, on the carrier corresponding to the second type of time domain unit. The carrier corresponding to the first type of time domain unit is configured with an uplink subband, and the carrier corresponding to the second type time domain unit is not configured with an uplink subband. The first type of time domain unit is a flexible time domain unit. The second type of time domain unit is a flexible time domain unit. The carrier is any one of multiple carriers.

The technical solutions of the embodiments of the present disclosure are applied to a multi-carrier system. In the multi-carrier system, multiple carriers are used for communication between a terminal device and a network device.

In some embodiments, the flexible time domain unit may be used for downlink transmission, and the flexible time domain unit used for downlink transmission may be understood as a downlink time domain unit.

Here, the operation 1001 can refer to the description related to the operation 901 in FIG. 9, and the operation 1001 may be implemented by replacing the "downlink time domain unit" with the "flexible time domain unit" in the description related to the operation 901.

It should be noted that, the above-described embodiments of FIG. 7 to FIG. 10 are described by taking the first type of time domain unit and the second type of time domain unit being both downlink time domain units or flexible time domain units. The technical solutions of the embodiments of the present disclosure may also include the following other embodiments.
1) The first type of time domain unit is a downlink time domain unit, and the second type of time domain unit is a flexible time domain unit. Some embodiments are implemented by replacing "the second type of time domain unit is a downlink time domain unit" in the above description related to FIG. 7 with "the second type of time domain unit is a flexible time domain unit".
2) The first type of time domain unit is a downlink time domain unit, and the second type of time domain unit is a flexible time domain unit. Some embodiments are implemented by replacing "the second type of time domain unit is a downlink time domain unit" in the above description related to FIG. 9 with "the second type of time domain unit is a flexible time domain unit".
3) The first type of time domain unit is a flexible time domain unit, and the second type of time domain unit is a downlink time domain unit. Some embodiments are implemented by replacing "the first type of time domain unit is a downlink time domain unit" in the above description related to FIG. 7 with "the first type of time domain unit is a flexible time domain unit".
4) The first type of time domain unit is a flexible time domain unit, and the second type of time domain unit is a downlink time domain unit. Some embodiments are implemented by replacing "the first type of time domain unit is a downlink time domain unit" in the above description related to FIG. 9 with "the first type of time domain unit is a flexible time domain unit".

FIG. 11 is the fifth schematic flowchart of a method for determining a configuration according to an embodiment of the present disclosure. As illustrated in FIG. 11, the method includes the following operation.

In operation 1101, a network device sends the first configuration and/or the second configuration to the terminal device. The first configuration is used for the terminal device to operate on a band combination corresponding to the first type of time domain unit, and the second configuration is used for the terminal device to operate on a band combination corresponding to the second type of time domain unit. The band combination corresponding to the first type time domain unit is configured with uplink subband(s), and the band combination corresponding to the second type of time domain unit is not configured with an uplink subband. The band combination includes multiple carriers.

In some embodiments, the first type of time domain unit is a downlink time domain unit, and the second type of time domain unit is a downlink time domain unit. In other embodiments, the first type of time domain unit is a flexible time domain unit, and the second type of time domain unit is a flexible time domain unit. In other embodiments, the first type of time domain unit is a downlink time domain unit, and the second type of time domain unit is a flexible time domain unit. In other embodiments, the first type of time domain unit is a flexible time domain unit, and the second type of time domain unit is a downlink time domain unit.

The technical solutions of the embodiments of the present disclosure are applied to a multi-carrier system. In the multi-carrier system, multiple carriers are used for communication between a terminal device and a network device.

In some embodiments, the multiple carriers correspond to a unified uplink radio frequency filter and a unified uplink antenna system on the network device side. This case may be referred to as the second mode of multi-carrier. For the second mode, the network device only needs a set of uplink radio frequency filter and uplink antenna system, and the hardware cost of the device is low. A set of uplink radio frequency filter and uplink antenna system correspond to multiple carriers. The uplink antenna system is used for the network device to receive the multiple carriers, and the uplink radio frequency filter is used for the network device to filter out the uplink subband part(s) from the received multiple carriers. Here, multiple carriers corresponding to a set of uplink radio frequency filter and uplink antenna system may be referred to as one band combination. In the second mode, the terminal device determines to operate, by using the first configuration, on the band combination corresponding to the first type of time domain unit, and/or to operate, by using the second configuration, on the band combination corresponding to the second type of time domain unit. Further understanding of the "second mode" may be made with reference to the foregoing related description. For the second mode, respective carriers of the multiple carriers are interrelated, that is, respective carriers in the band combination are interrelated, and this association is embodied in that respective carriers in the band combination are operated by using the first configuration or operated by using the second configuration, so that respective carriers in the band combination may correspond to a unified uplink radio frequency filter and a unified uplink antenna system on the network device side. Since the multiple carriers correspond to a unified uplink radio frequency filter and a unified uplink antenna system on the network device side, the hardware cost on the network device side is low, the existing single carrier system may be compatible by the network device, and the upgrade cost of the network device is low.

It should be noted that the multiple carriers correspond to a unified uplink radio frequency filter on the network device side, which means that each carrier of the multiple carriers is filtered by the same uplink radio frequency filter on the network device side.

In a case that each carrier of the multiple carriers is filtered by the same uplink radio frequency filter on the network device side, the network device only needs to configure one uplink radio frequency filter, which effectively saves the hardware cost of the device.

It should be noted that multiple carriers correspond to a unified uplink antenna system on the network device side, which means that each carrier of the multiple carriers is received by the same uplink antenna system on the network device side. The uplink antenna system herein includes one or more uplink reception antennas, and the uplink antenna system is used for the network device to receive multiple carriers.

In some embodiments, the network device sends the first configuration and/or the second configuration to the terminal device through Radio Resource Control (RRC) signaling.

In the embodiments of the present disclosure, the first configuration is a configuration corresponding to SBFD, or a configuration specific to SBFD, or a configuration specific to the first type of time domain unit (such as an SBFD time domain unit). The second configuration is a configuration corresponding to non-SBFD, or a conventional configuration, or a configuration of the second type of time domain unit (such as a non-SBFD time domain unit or a conventional time domain unit). The first configuration is at least partially different from the second configuration.

Here, further understanding of the "first configuration" and/or the "second configuration" may be made with reference to the above description related to FIG. 7 to FIG. 10.

In some embodiments, if one time domain unit of two adjacent time domain units belongs to the first type of time domain unit and the other time domain unit of the two adjacent time domain units belongs to the second type of time domain unit, the network device determines that there is a switching period between the two adjacent time domain units, and the switching period is used to perform switching between uplink transmission and downlink transmission. If both the two adjacent time domain units belong to the first type of time domain unit or the second type of time domain unit, the network device determines that there is no switching period between the two adjacent time domain units.

In some embodiments, if a band combination corresponding to one downlink time domain unit of two adjacent downlink time domain units is configured with uplink subband(s) and the band combination corresponding to the other downlink time domain unit of the two adjacent downlink time domain units is not configured with an uplink subband, the network device determines that there is a switching period between the two adjacent downlink time domain units, and the switching period is used to perform switching between uplink transmission and downlink transmission. It may be ensured by the switching period that the network device has sufficient time to switch between the uplink transmission and downlink transmission. If both the band combinations corresponding to the two adjacent downlink time domain units are configured with uplink subband(s) or are not configured with an uplink subband, the network device determines that there is no switching period between the two adjacent downlink time domain units.

In some embodiments, if a band combination corresponding to one flexible time domain unit of two adjacent downlink time domain units is configured with uplink subband(s) and the band combination corresponding to the other flexible time domain unit of two adjacent downlink time domain units is not configured with an uplink subband, the network device determines that there is a switching period between the two adjacent flexible time domain units, and the switching period is used to perform switching between uplink transmission and downlink transmission. It may be ensured by the switching period that the network device has sufficient time to switch between the uplink transmission and downlink transmission. If both the band combinations corresponding to the two adjacent flexible time domain units are configured with uplink subband(s) or are not configured with an uplink subband, the network device determines that there is no switching period between the two adjacent flexible time domain units.

FIG. 12 is the sixth schematic flowchart of a method for determining a configuration according to an embodiment of the present disclosure. As illustrated in FIG. 12, the method includes the following operation.

In operation 1201, a network device sends the first configuration and/or the second configuration to the terminal device, the first configuration is used for the terminal device to operate on a carrier corresponding to the first type of time domain unit, and the second configuration is used for the terminal device to operate on the carrier corresponding to the second type of time domain unit. The carrier corresponding to the first type of time domain unit is configured with uplink subband(s), and the carrier corresponding to the second type of time domain unit is not configured with an uplink subband. The carrier is any one of multiple carriers.

In some embodiments, the first type of time domain unit is a downlink time domain unit, and the second type of time domain unit is a downlink time domain unit. In other embodiments, the first type of time domain unit is a flexible time domain unit, and the second type of time domain unit is a flexible time domain unit. In other embodiments, the first type of time domain unit is a downlink time domain unit, and the second type of time domain unit is a flexible time domain unit. In other embodiments, the first type of time domain unit is a flexible time domain unit, and the second type of time domain unit is a downlink time domain unit.

The technical solutions of the embodiments of the present disclosure are applied to a multi-carrier system. In the multi-carrier system, multiple carriers are used for communication between a terminal device and a network device.

In some embodiments, each carrier of the multiple carriers corresponds to an independent uplink radio frequency filter and an independent uplink antenna system on the network device side. This case may be referred to as the first mode of multi-carrier. For the first mode, the network device needs multiple sets of uplink radio frequency filter and uplink antenna system, each set of uplink radio frequency filter and the uplink antenna system corresponds to a carrier, the uplink antenna system is used for the network device to receive the carrier, and the uplink radio frequency filter is used for the network device to filter out the uplink subband part(s) from the received carrier. Each carrier of the multiple carriers may be independently configured with uplink subband(s), and a part of the multiple carriers may be configured with uplink subband(s), all of the carriers may be configured with uplink subbands, or all of the carriers may not be configured with an uplink subband. In the first mode, for any one of the multiple carriers, the terminal device determines to operate, by using the first configuration, on the carrier corresponding to the first type of time domain unit, and/or to operate, by using the second configuration, on the carrier corresponding to the second type of time domain unit. Further understanding of the "first mode" may be made with reference to the foregoing related description. For the first mode, each carrier of the multiple carriers may independently configure uplink subband(s), and the configuration used by each carrier is more flexible, which can improve system performance.

It should be noted that each carrier of the multiple carriers corresponds to an independent uplink radio frequency filter, which means that different carriers of the multiple carriers are filtered by different uplink radio frequency filters.

In a case that different carriers of multiple carriers are filtered by different uplink radio frequency filters, the network device needs to configure multiple uplink radio frequency filters, and different carriers are filtered by different uplink radio frequency filters, and each carrier may be independently configured with uplink subband(s), and the configuration of uplink subbands is more flexible.

It should be noted that each carrier of the multiple carriers corresponds to an independent uplink antenna system, which means that different carriers of the multiple carriers are received by using different uplink antenna systems. The uplink antenna system herein includes one or more uplink reception antennas, and the uplink antenna system is used for the network device to receive the carrier.

In the above solution, each carrier in the multiple carriers may use a different configuration, which depends on whether the carrier is configured with uplink subband(s). If the carrier is configured with the uplink subband, the first configuration is used for the carrier. If the carrier is not configured with the uplink subband, the second configuration is used for the carrier. Therefore, each carrier in the multiple carriers may be flexibly configured.

In some embodiments, the network device sends the first configuration and/or the second configuration to the terminal device through RRC signaling.

In the embodiments of the present disclosure, the first configuration is a configuration corresponding to SBFD, or a configuration specific to SBFD, or a configuration specific to the first type of time domain unit (such as an SBFD time domain unit). The second configuration is a configuration corresponding to non-SBFD, or a conventional configuration, or a configuration of the second type of time domain unit (such as a non-SBFD time domain unit or a conventional time domain unit). The first configuration is at least partially different from the second configuration.

Here, further understanding of the "first configuration" and/or the "second configuration" may be made with reference to the above description related to FIG. 7 to FIG. 10.

In some embodiments, if one time domain unit of two adjacent time domain units belongs to the first type of time domain unit and the other time domain unit of the two adjacent time domain units belongs to the second type of time domain unit, the network device determines that there is a switching period between the two adjacent time domain units, and the switching period is used to perform switching between uplink transmission and downlink transmission. If both the two adjacent time domain units belong to the first type of time domain unit or the second type of time domain unit, the network device determines that there is no switching period between the two adjacent time domain units.

In some embodiments, if a carrier corresponding to one downlink time domain unit of two adjacent downlink time domain units is configured with uplink subband(s) and the carrier corresponding to the other downlink time domain unit of the two adjacent downlink time domain units is not configured with an uplink subband, the network device determines that there is a switching period between the two adjacent downlink time domain units, and the switching period is used to perform switching between uplink transmission and downlink transmission. It may be ensured by the switching period that the network device has sufficient time to switch between the uplink transmission and downlink transmission. If both the carriers corresponding to the two adjacent downlink time domain units are configured with uplink subband(s) or are not configured with an uplink subband, the network device determines that there is no switching period between the two adjacent downlink time domain units.

In some embodiments, if a carrier corresponding to one flexible time domain unit of two adjacent downlink time domain units is configured with uplink subband(s) and the caiier corresponding to the other flexible time domain unit of two adjacent downlink time domain units is not configured with an uplink subband, the network device determines that there is a switching period between the two adjacent flexible time domain units, and the switching period is used to perform switching between uplink transmission and downlink transmission. It may be ensured by the switching period that the network device has sufficient time to switch between the uplink transmission and downlink transmission. If both the carriers corresponding to the two adjacent flexible time domain units are configured with uplink subband(s) or are not configured with an uplink subband, the network device determines that there is no switching period between the two adjacent flexible time domain units.

Hereinafter, the technical solutions of the embodiments of the present disclosure will be described with reference to specific application examples. In the following application examples, a time domain unit is used as a symbol as an example, and the time domain unit may be a subframe, a slot, a subslot, or the like.

### Application Example 1

The network device supports multi-carrier duplex mode. In the multi-carrier duplex mode, the network device configures an independent uplink radio frequency filter and an independent uplink antenna system for each of the multiple carriers. Further, the network device may configure a unified downlink radio frequency filter and a unified downlink antenna system for multiple carriers, or may configure an independent downlink radio frequency filter and an independent downlink antenna system for each of the multiple carriers.

For a carrier, if the carrier is configured with uplink subband(s) on one symbol, the symbol is an SBFD symbol. If the carrier is not configured with an uplink subband on one symbol, the symbol is a non-SBFD symbol. The terminal device operates on the SBFD symbol according to the first configuration and/or on the non-SBFD symbol according to the second configuration. In other words, the terminal device operates on the carrier configured with the uplink subband(s) according to the first configuration and/or operates on the carrier that is not configured with the uplink subband according to the second configuration. Here, further understanding of the "first configuration" and the "second configuration" may be made with reference to the foregoing related description.

Taking carrier n (carrier n is one carrier among multiple downlink carriers) as an example, if carrier n is configured with uplink subband(s) on symbol x, the terminal device operates, by using the first configuration, on the symbol x for carrier n, and if the carrier n is not configured with the uplink subband on the symbol x, the terminal device operates, by using the second configuration, on the symbol x for the carrier n.

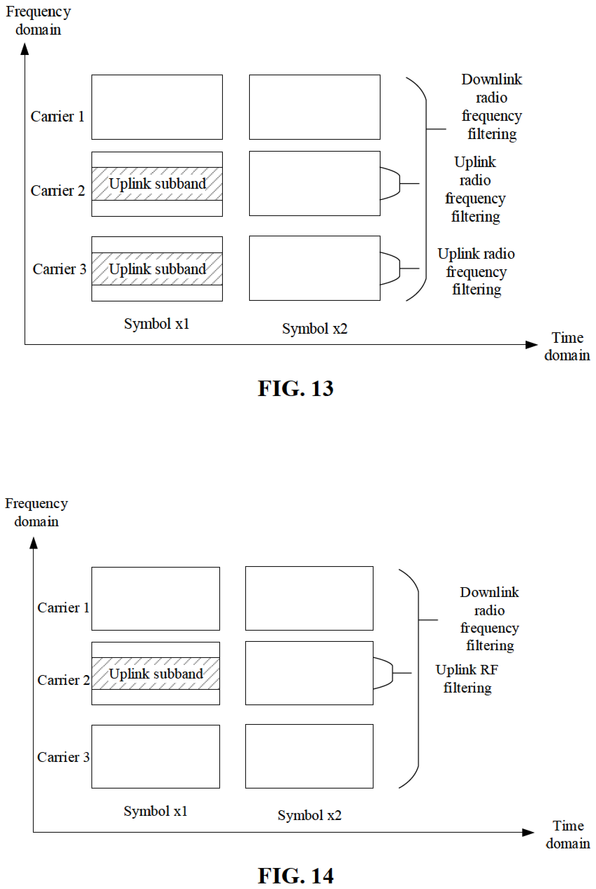

In some embodiments, as illustrated in FIG. 13, the multiple carriers include a carrier 1, a carrier 2, and a carrier 3. The symbol x for the carrier 2 and the carrier 3 is configured with uplink subbands, and the symbol y for the carrier 1, the carrier 2 and the carrier 3 is not configured with the uplink subband. The uplink radio frequency filtering is performed on the carrier 2 and the carrier 3 by using independent uplink radio frequency filters, respectively. The terminal device determines a multi-carrier duplex mode, which may be stipulated by the protocol or configured by the network device. The duplex mode is the first mode, and further understanding of the "first mode" may be referred to the foregoing related description.
1) The terminal device determines the uplink power configuration of the carrier n on the symbol x according to whether the carrier n is configured with uplink subband(s) on the symbol x. If the carrier n is configured with the uplink subband(s) on the symbol x, it is determined that the uplink power configuration used for the carrier n on the symbol x (i.e., the SBFD symbol) is the first uplink power configuration. If the carrier n is not configured with the uplink subband on the symbol x, it is determined that the uplink power configuration used for the carrier n on the symbol x (i.e., a non-SBFD symbol) is the second uplink power configuration. The first uplink power configuration and the second uplink power configuration are configured by the network device. Further understanding of the "first uplink power configuration" and the "second uplink power configuration" may be made with reference to the foregoing related description. For the two cases of "being configured with the uplink subband(s)" and "being not configured with the uplink subband", the network device uses different reception antenna configurations for the SBFD symbol and the non-SBFD symbol. Referring to the related description in FIG. 4, the terminal device uses different uplink power configurations for the SBFD symbol and the non-SBFD symbol, which can make up for the configuration difference between the reception antennas of the network device and ensure uplink coverage. For example, for a carrier (corresponding to an SBFD symbol) configured with uplink subband(s), the network device configures a small number of reception antennas (for example, the number of reception antennas for the carrier configured with the uplink subband(s) is half of the number of reception antennas for the carrier that is not configured with the uplink subband). Accordingly, the network device needs to configure a greater target received power (that is, the first uplink power configuration) to make up for the problem of the smaller number of reception antennas, thereby ensuring uplink coverage. Conversely, for a carrier (corresponding to a non-SBFD symbol) that is not configured with the uplink subband, the network device configures a large number of reception antennas. Accordingly, the network device may configure a lower target received power (that is, the second uplink power configuration) to reduce the energy consumption of the terminal device.
   Taking FIG. 13 as an example, since the carrier 2 and carrier 3 are configured with the uplink subbands on the symbol x1, the first uplink power configuration is used for the carrier 2 and carrier 3 on the symbol x1, for example, the target received power P0 = 0. Since carrier 1 is not configured with uplink subband on the symbol x1 and carrier 1, carrier 2 and carrier 3 are not configured with uplink subband on symbol x2, the second uplink power configuration is used for the carrier 1 on the symbol x1 and carrier 1, carrier 2 and carrier 3 on symbol x2, for example, target received power P0 = - 3.
2) The terminal device determines the CSI reporting configuration of the carrier n on the symbol x according to whether the carrier n is configured with uplink subband(s) on the symbol x. If the carrier n is configured with the uplink subband(s) on the symbol x, it is determined that the CSI reporting configuration used for the carrier n on the symbol x (i.e., the SBFD symbol) is the first CSI reporting configuration. If the carrier n is not configure with the uplink subband on the symbol x, it is determined that the CSI reporting configuration used for the carrier n on the symbol x (i.e., the non-SBFD symbol) is the second CSI reporting configuration. The first CSI reporting configuration and the second CSI reporting configuration are configured by the network device. Further understanding of the "first CSI reporting configuration" and the "second CSI reporting configuration" may be made with reference to the foregoing related description. For the two cases of "being configured with the uplink subband(s)" and "being not configured with the uplink subband", the network device uses different reception antenna configurations for the SBFD symbol and the non-SBFD symbol. Referring to the related description in FIG. 4, the terminal device uses different CSI reporting configurations for the SBFD symbol and the non-SBFD symbol, which can make up for the configuration difference between the reception antennas of the network device. For example, for a carrier (corresponding to an SBFD symbol) configured with uplink subband(s), the network device configures a small number of reception antennas (for example, the number of reception antennas for the carrier configured with the uplink subband(s) is half of the number of reception antennas for the carrier that is not configured with the uplink subband). Accordingly, the network device needs to configure with fewer antenna ports and a smaller number of antenna panels (i.e., the first CSI reporting configuration). On the contrary, for the carrier (corresponding to non-SBFD symbol) that is not configured with the uplink subband, the network device configures a larger number of reception antennas. Accordingly, the network device may configure more antenna ports and a larger number of antenna panels (i.e., the second CSI reporting configuration).
   Taking FIG. 13 as an example, since the carrier 2 and carrier 3 are configured with the uplink subbands on the symbol x1, the first CSI reporting configuration, such as a configuration of 2 antenna ports and an antenna panel, is used for the carrier 2 and carrier 3 on the symbol x1. Since the carrier 1 is not configured with the uplink subband on symbol x1 and carrier 1, carrier 2 and carrier 3 are not configured with the uplink subband on symbol x2, the second CSI reporting configuration, such as a configuration of 4 antenna ports and 2 antenna panels (codebooks of 2 antenna ports are contained in each antenna panel), is used for the carrier 1 on symbol x1 and carrier 1, carrier 2 and carrier 3 on symbol x2.
   It should be noted that the CSI reporting configuration described in the embodiments of the present disclosure may be replaced by a CSI measurement configuration.
3) The terminal device/or the network device determines whether there is a switching period between the symbol x and the symbol x-1 according to whether the carrier n is configured with the uplink subband(s) on the symbol x and the symbol x-1. If the carrier n is not configured with the uplink subband(s) on symbol x-1 and the carrier n is configured with uplink subband(s) on symbol x, or if the carrier n is configured with uplink subband(s) on symbol x-1 and the carrier n is not configured with the uplink subband on symbol x, there is a switching period between the symbol x-1 and the symbol x for the carrier n. If the carrier n is configured with the uplink subband(s) on both symbol x and symbol x-1 or the carrier n is not configured with the uplink subband on symbol x and symbol x-1, there is no switching period between symbol x-1 and symbol x for the carrier n. Here, the switching period is used to reserve the time of conversion between uplink transmission and downlink transmission, and to ensure that the terminal device and/or the network device have sufficient time to convert between uplink transmission and downlink transmission.

Taking FIG. 13 as an example, for carrier 2 and carrier 3, symbol x1 and symbol x2 are adjacent to each other, but only symbol x1 is configured with uplink subbands, and symbol x2 is not configured with the uplink subband. A switching period is required between symbol x1 and symbol x2 for carrier 2 and carrier 3, and the period of signals scheduled by the network device on these two symbols is required to be greater than or equal to the switching period. For the carrier 1, symbol x1 and symbol x2 are adjacent, but symbol x1 and symbol x2 are not configured with uplink subband, the switching period is not required between symbol x1 and symbol x2 for carrier 1, that is, the signals scheduled by the network device on these two symbols may be continuous.

### Application Example 2

The network device supports multi-carrier duplex mode. In the multi-carrier duplex mode, the network device configures a unified uplink radio frequency filter and a unified uplink antenna system for multiple carriers. The multiple carriers may be referred to as one band combination. Furthermore, the network device may configure a unified downlink radio frequency filter and a unified downlink antenna system for the band combination.

For a band combination, if the band combination is configured with uplink subband(s) on one symbol, the symbol is an SBFD symbol. If the band combination is not configured with the uplink subband on one symbol, the symbol is a non-SBFD symbol. The terminal device operates on the SBFD symbol according to the first configuration and/or on the non-SBFD symbol according to the second configuration. In other words, the terminal device operates on the band combination configured with the uplink subband(s) according to the first configuration and/or operates on the band combination that is not configured with the uplink subband according to the second configuration. Here, further understanding of the "first configuration" and the "second configuration" may be made with reference to the foregoing related description.

Taking the band combination n as an example, if the band combination n is configured with uplink subband(s), the terminal device operates, by using the first configuration, on each carrier of the band combination n, regardless of whether the uplink subband(s) is(are) configured on one carrier or multiple carriers of the band combination n. If the band combination n is not configured with the uplink subband, that is, all carriers in the band combination n are not configured with the uplink subband, the terminal device operates, by using the second configuration, on each carrier of the carrier n.

In some embodiments, as illustrated in FIG. 14, the terminal device determines that the carriers included in the band combination n are carrier 1, carrier 2, and carrier 3. The band combination n may be set in advance or may be reported to the network device by the terminal device. The carrier 2 corresponding to the symbol x1 is configured with an uplink subband, and all the carriers corresponding to the symbol x2 are not configured with an uplink subband, that is, the band combination n is configured with the uplink subband on the symbol x1, the band combination n is not configured with the uplink subband on the symbol x2, and the uplink radio frequency filtering is performed on the carrier 2 by using a unified uplink radio frequency filter. The terminal device determines a multi-carrier duplex mode, which may be stipulated by the protocol or configured by the network device. The duplex mode is the second mode, and further understanding of the "second mode" may be referred to the foregoing related description.
1) The terminal device determines the uplink power configuration of the band combination n on the symbol x according to whether the band combination n is configured with the uplink subband(s) on the symbol x. If the band combination n is configured with the uplink subband(s) on the symbol x, it is determined that the uplink power configuration used for the band combination n on the symbol x (i.e., the SBFD symbol) is the first uplink power configuration. If the band combination n is not configured with the uplink subband on the symbol x, it is determined that the uplink power configuration used for the band combination n on the symbol x (i.e., a non-SBFD symbol) is the second uplink power configuration. The first uplink power configuration and the second uplink power configuration are configured by the network device. Further understanding of the "first uplink power configuration" and the "second uplink power configuration" may be made with reference to the foregoing related description. For the two cases of "being configured with the uplink subband(s)" and "being not configured with the uplink subband", the network device uses different reception antenna configurations for the SBFD symbol and the non-SBFD symbol. Referring to the related description in FIG. 4, the terminal device uses different uplink power configurations for the SBFD symbol and the non-SBFD symbol, which can make up for the configuration difference between the reception antennas of the network device and ensure uplink coverage. For example, for a band combination (corresponding to an SBFD symbol) configured with uplink subband(s), the network device configures a small number of reception antennas (for example, the number of reception antennas for the band combination configured with the uplink subband(s) is half of the number of reception antennas for the band combination that is not configured with the uplink subband). Accordingly, the network device needs to configure a greater target received power (that is, the first uplink power configuration) to make up for the problem of the small number of reception antennas, thereby ensuring uplink coverage. Conversely, for a band combination (corresponding to a non-SBFD symbol) that is not configured with the uplink subband, the network device configures a large number of reception antennas. Accordingly, the network device may configure a lower target received power (that is, the second uplink power configuration) to reduce the energy consumption of the terminal device.
   Taking FIG. 14 as an example, since the band combination n is configured with the uplink subband on the symbol x1, the first uplink power configuration is used for the carrier 1, carrier 2, and carrier 3 in the band combination n on the symbol x1. Since band combination n is not configured with the uplink subband on symbol x2, the second uplink power configuration is used for carrier 1, carrier 2, and carrier 3 in the band combination n on symbol x2. Here, the first uplink power configuration and the second uplink power configuration of the carrier 1, carrier 2, and carrier 3 may be uniformly configured or may be independently configured. Taking independent configuration as an example, for symbol x1, the target received powers of carrier 1, carrier 2 and carrier 3 are configured as P11, P12 and P13, respectively. For symbol x2, the target received powers of carrier 1, carrier 2 and carrier 3 are configured as P21, P22 and P23, respectively. Typically, for a band combination configured with the uplink subband(s), the network device configures a small number of reception antennas (for example, the number of reception antennas for the band combination configured with the uplink subband(s) is half of the number of reception antennas for the band combination that is not configured with the uplink subband). Accordingly, the network device needs to configure a greater target received power to make up for the problem of the smaller number of reception antennas, thereby ensuring uplink coverage. Conversely, for a band combination that is not configured with the uplink subband, the network device configures a large number of reception antennas. Accordingly, the network device may configure a lower target received power to reduce the energy consumption of the terminal device. Therefore, P11 > P21, P12 > P22, and P12 > P22.
2) The terminal device determines the CSI reporting configuration of the band combination n on the symbol x according to whether the band combination n is configured with the uplink subband(s) on the symbol x. If the band combination n is configured with the uplink subband(s) on the symbol x, it is determined that the CSI reporting configuration used for the band combination n on the symbol x (i.e., the SBFD symbol) is the first CSI reporting configuration. If the band combination n is not configured with the uplink subband(s) on the symbol x, it is determined that the CSI reporting configuration used for the band combination n on the symbol x (i.e., the non-SBFD symbol) is the second CSI reporting configuration. The first CSI reporting configuration and the second CSI reporting configuration are configured by the network device. Further understanding of the "first CSI reporting configuration" and the "second CSI reporting configuration" may be made with reference to the foregoing related description. For the two cases of "being configured with the uplink subband(s)" and "being not configured with the uplink subband", the network device uses different reception antenna configurations for the SBFD symbol and the non-SBFD symbol. Referring to the related description in FIG. 4, the terminal device uses different CSI reporting configurations for the SBFD symbol and the non-SBFD symbol, which can make up for the configuration difference between the reception antennas of the network device. For example, for a band combination (corresponding to an SBFD symbol) configured with uplink subband(s), the network device configures a smaller number of reception antennas (for example, the number of reception antennas for the band combination configured with the uplink subband(s) is half of the number of reception antennas for the band combination that is not configured with the uplink subband(s)). Accordingly, the network device needs to configure with fewer antenna ports and a smaller number of antenna panels (i.e., the first CSI reporting configuration). On the contrary, for the band combination (corresponding to non-SBFD symbol) that is not configured with the uplink subband(s), the network device configures a larger number of reception antennas. Accordingly, the network device may configure more antenna ports and a larger number of antenna panels (i.e., the second CSI reporting configuration).
   Taking FIG. 14 as an example, since the band combination n is configured with the uplink subband on the symbol x1, the first CSI reporting configuration, such as the configuration of 2 antenna ports, is used for all carriers in the band combination n on the symbol x1. Since the band combination n is not configured with uplink subband on symbol x2, the second CSI reporting configuration, such as a configuration of 4 antenna ports, is used for all carriers in the band combination n on symbol x2.
   It should be noted that the CSI reporting configuration described in the embodiments of the present disclosure may be replaced by a CSI measurement configuration.
3) The terminal device/or the network device determines whether there is a switching period between the symbol x and the symbol x-1 according to whether the band combination n is configured with the uplink subband(s) on the symbol x and the symbol x-1. If the band combination n is not configured with uplink subband(s) on symbol x-1 and the band combination n is configured with uplink subband(s) on symbol x, or if the band combination n is configured with uplink subband(s) on symbol x-1 and the band combination n is not configured with the uplink subband on symbol x, there is a switching period between the symbol x-1 and the symbol x for the band combination n. If the band combination n is configured with the uplink subband(s) on both symbol x and symbol x-1 or the band combination n is not configured with the uplink subband on symbol x and symbol x-1, there is no switching period between symbol x-1 and symbol x for the band combination n. Here, the switching period is used to reserve the time of conversion between uplink transmission and downlink transmission, and to ensure that the terminal device and/or the network device have sufficient time to convert between uplink transmission and downlink transmission.

Taking FIG. 14 as an example, for band combination n, symbol x1 and symbol x2 are adjacent to each other, but only symbol x1 is configured with the uplink subband, and symbol x2 is not configured with the uplink subband. A switching period is required between symbol x1 and symbol x2 for band combination n, and the period of signals scheduled by the network device on these two symbols is required to be greater than or equal to the switching period.

The preferred embodiments of the present disclosure have been described in detail above with reference to the accompanying drawings, but the present disclosure is not limited to the specific details in the above-described embodiments. Within the scope of the technical concept of the present disclosure, various simple modifications may be made to the technical solutions of the present disclosure, and these simple modifications all fall within the scope of protection of the present disclosure. For example, various specific technical features described in the above-described detailed embodiments may be combined in any suitable manner without contradiction, and various possible combinations will not be described separately in the present disclosure in order to avoid unnecessary repetition. For example, various embodiments of the present disclosure may be combined arbitrarily, and as long as they do not violate the idea of the present disclosure, they should also be regarded as the disclosure of the present disclosure. For another example, on the premise that there is no conflict, each embodiment described in the present disclosure and/or the technical features in each embodiment may be arbitrarily combined with the prior art, and the technical solution obtained after the combination should also fall within the scope of protection of the present disclosure.

It should also be understood that in various method embodiments of the present disclosure, the size of the sequence number of the above-described processes does not mean the sequence of execution, and the sequence of execution of each process should be determined by its function and internal logic, and should not constitute any limitation on the implementation of the embodiments of the present disclosure. In addition, in the embodiments of the present disclosure, the terms "downlink", "uplink", and "sidelink" are used to indicate the transmission direction of signals or data. The "downlink" is used to indicate that the transmission direction of signals or data is the first direction from the station to the user equipment of the cell, "uplink" is used to indicate that the transmission direction of signals or data is the second direction from the user equipment of the cell to the station, and "sidelink" is used to indicate that the transmission direction of signals or data is the third direction from the user equipment 1 to the user equipment 2. For example, "downlink signal" indicates that the transmission direction of the signal is the first direction. In addition, in the embodiments of the present disclosure, the term "and/or" is only used for describing one kind of association relationship between association objects, and indicates that there may be three kinds of relationships. Specifically, A and/or B may represent three cases that A exists alone, A and B exist simultaneously, and B exists alone. In addition, the character "/" in the present disclosure generally indicates that there is an "or" relationship between the association objects.

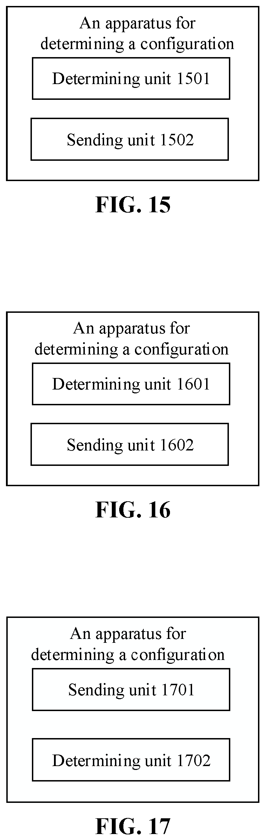

FIG. 15 is a schematic diagram of a configuration and composition of an apparatus for determining a configuration according to an embodiment of the present disclosure. The apparatus is applied to a terminal device. As illustrated in FIG. 15, the apparatus for determining a configuration includes a determining unit 1501.

The determining unit 1501 is configured to determine to operate, by using the first configuration, on a band combination corresponding to the first type of time domain unit, and/or to operate, by using the second configuration, on the band combination corresponding to the second type of time domain unit. The band combination corresponding to the first type of time domain unit is configured with uplink subband(s), the band combination corresponding to the second type of time domain unit is not configured with the uplink subband(s), the first type of time domain unit includes a downlink time domain unit and/or a flexible time domain unit, the second type of time domain unit includes a downlink time domain unit and/or a flexible time domain unit, and the band combination includes multiple carriers.

In some embodiments, the determining unit 1501 is configured to determine that the band combination corresponding to the first type of time domain unit is configured with the uplink subband(s) if at least one carrier in the band combination corresponding to the first type of time domain unit is configured with the uplink subband(s); and/or that the band combination corresponding to the second type of time domain unit is not configured with the uplink subband(s) if all carriers in the band combination corresponding to the second type of time domain unit are not configured with the uplink subband(s).

In some embodiments, in a case that the number of carriers configured with the uplink subbands in the band combination corresponding to the first type of time domain unit is greater than one, the carriers configured with the uplink subbands in the band combination corresponding to the first type of time domain unit are continuous.

In some embodiments, the determining unit 1501 is configured to determine to operate, by using the first configuration, on respective carriers in the band combination corresponding to the first type of time domain unit, and/or determine to operate, by using the second configuration, on respective carriers in the band combination corresponding to the second type of time domain unit.

In some embodiments, the first configuration includes at least one of following: the first uplink power configuration, the first CSI reporting configuration, or the first spatial relation configuration.

In some implementations, the first uplink power configuration includes at least one of following parameters: the first target received power or the first open-loop power adjustment amount.

In some embodiments, the first CSI reporting configuration includes at least one of following parameter: the first antenna port, the first signal sending power, or the first number of antenna panels.

In some embodiments, the apparatus further includes a sending unit 1502. The sending unit 1502 is configured to at least one of following: performing uplink sending, according to the first uplink power configuration, on the band combination configured with uplink subband(s); performing CSI reporting, according to the first CSI reporting configuration, on the band combination configured with the uplink subband(s); or performing uplink sending, according to the first spatial relation configuration, on the band combination configured with uplink subband(s).

In some embodiments, the second configuration includes at least one of following: the second uplink power configuration, the second CSI reporting configuration, or the second spatial relation configuration.

In some implementations, the second uplink power configuration includes at least one of following parameters: the second target received power or the second open-loop power adjustment amount.

In some embodiments, the second CSI reporting configuration includes at least one following parameters: the second antenna port, the second signal sending power, or the second number of antenna panels.

In some embodiments, the apparatus further includes the sending unit 1502. The sending unit 1502 is configured to at least one of following: performing uplink sending, according to the second uplink power configuration, on the band combination that is not configured with the uplink subband; performing CSI reporting, according to the second CSI reporting configuration, on the band combination that is not configured with the uplink subband; performing uplink sending, according to the second spatial relation configuration, on the band combination that is not configured with the uplink subband.

In some embodiments, the determining unit 1501 is configured to determine that there is a switching period between the two adjacent time domain units if one of the two adjacent time domain units belongs to the first type of time domain unit and the other of the two adjacent time domain units belongs to the second type of time domain unit, and the switching period is used for performing switching between uplink transmission and downlink transmission, and determine that there is no switching period between the two adjacent time domain units if both the two adjacent time domain units belong to the first type of time domain unit or the second type of time domain unit.

In some embodiments, the time domain unit is a subframe, a slot, a subslot or a symbol.

In some embodiments, the multiple carriers are used for communication between the terminal device and a network device, and the multiple carriers correspond to a unified uplink radio frequency filter and a unified uplink antenna system on the network device side.

Those skilled in the art should understand that the related description of the above-described apparatus for determining the configuration according to the embodiment of the present disclosure may be understood with reference to the related description of the method for determining the configuration according to the embodiments of the present disclosure.

FIG. 16 is the second schematic diagram of a configuration and composition of an apparatus for determining a configuration according to an embodiment of the present disclosure. The apparatus is applied to a terminal device. As illustrated in FIG. 16, the apparatus for determining a configuration includes a determining unit 1601.

The determining unit 1601 is configured to determine to operate, by using the first configuration, on a carrier corresponding to the first type of time domain unit, and/or to operate, by using the second configuration, on the carrier corresponding to the second type of time domain unit. The carrier corresponding to the first type of time domain unit is configured with uplink subband(s), the carrier corresponding to the second type of time domain unit is not configured with the uplink subband(s), the first type of time domain unit includes a downlink time domain unit and/or a flexible time domain unit, the second type of time domain unit includes a downlink time domain unit and/or a flexible time domain unit, and the carrier is any one of multiple carriers.

In some embodiments, the first configuration includes at least one of following: the first uplink power configuration, the first CSI reporting configuration, or the first spatial relation configuration.

In some embodiments, the first uplink power configuration includes at least one of following parameters: the first target received power or the first open-loop power adjustment amount.

In some embodiments, the first CSI reporting configuration includes at least one of following parameters: the first antenna port, the first signal sending power, or the first number of antenna panels.

In some embodiments, the second configuration includes at least one of following: the second uplink power configuration, the second CSI reporting configuration, or the second spatial relation configuration.

In some embodiments, the second uplink power configuration includes at least one following parameter: the second target received power or the second open-loop power adjustment amount.

In some embodiments, the second CSI reporting configuration includes at least one of following parameters: the second antenna port, the second signal sending power, or the second number of antenna panels.

In some embodiments, the apparatus further includes a sending unit 1602. The sending unit 1602 is configured to at least one of following: performing uplink sending, according to the second uplink power configuration, on the carrier that is not configured with the uplink subband; performing CSI reporting, according to the second CSI reporting configuration, on the carrier that is not configured with the uplink subband; or performing uplink sending, according to the second spatial relation configuration, on the carrier that is not configured with the uplink subband.

In some embodiments, the determining unit 1601 is configured to determine that there is a switching period between the two adjacent time domain units if one of the two adjacent time domain units belongs to the first type of time domain unit and the other of the two adjacent time domain units belongs to the second type of time domain unit, and the switching interval is used for performing switching between uplink transmission and downlink transmission, and determine that there is no switching period between the two adjacent time domain units if both the two adjacent time domain units belong to the first type of time domain unit or the second type of time domain unit.

In some embodiments, the time domain unit is a subframe, a slot, a subslot or a symbol.

In some embodiments, the multiple carriers are used for communication between the terminal device and the network device, and each carrier of the multiple carriers corresponds to an independent uplink radio frequency filter and an independent uplink antenna system on the network device side.

Those skilled in the art should understand that the description of the above-described apparatus for determining a configuration of the embodiment of the present disclosure may be understood with reference to the description of the method for determining a configuration of the embodiments of the present disclosure.

FIG. 17 is the third schematic diagram of the structure and composition of the apparatus for determining a configuration according to an embodiment of the present disclosure. The apparatus is applied to a network device. As illustrated in FIG. 17, the apparatus for determining the configuration includes a sending unit 1701.

The sending unit 1701 is configured to send the first configuration and/or the second configuration to a terminal device. The first configuration is used for the terminal device to operate on a band combination corresponding to the first type of time domain unit, the second configuration is used for the terminal device to operate on the band combination corresponding to a second type of time domain unit, the band combination corresponding to the first type of time domain unit is configured with uplink subband(s), the band combination corresponding to the second type of time domain unit is not configured with the uplink subband(s), the first type of time domain unit includes a downlink time domain unit and/or a flexible time domain unit, the second type of time domain unit includes a downlink time domain unit and/or a flexible time domain unit, and the band combination includes multiple carriers.

In some embodiments, if at least one carrier in the band combination corresponding to the first type of time domain unit is configured with uplink subband(s), the band combination corresponding to the first type of time domain unit is configured with the uplink subband(s), and/or if all carriers in the band combination corresponding to the second type time domain unit are not configured with the uplink subband(s), the band combination corresponding to the second type of time domain unit is not configured with the uplink subband(s).

In some embodiments, in a case that the number of carriers configured with the uplink subbands in the band combination corresponding to the first type of time domain unit is greater than one, the carriers configured with the uplink subbands in the band combination corresponding to the first type of time domain unit are continuous.

In some embodiments, the first configuration includes at least one of following: the first uplink power configuration, the first CSI reporting configuration, or the first spatial relation configuration.

In some embodiments, the first uplink power configuration includes at least one of following parameters: the first target received power or the first open-loop power adjustment amount.

In some embodiments, the first CSI reporting configuration includes at least one of following parameters: the first antenna port, the first signal sending power, or the first number of antenna panels.

In some embodiments, the second configuration includes at least one of following: the second uplink power configuration, the second CSI reporting configuration, or the second spatial relation configuration.

In some embodiments, the second uplink power configuration includes at least one of following parameter: the second target received power or the second open-loop power adjustment amount.

In some embodiments, the second CSI reporting configuration includes at least one of following parameter: the second antenna port, the second signal sending power, or the second number of antenna panels.

In some embodiments, the apparatus further includes a determining unit 1702. The determining unit 1702 is configured to determine that there is a switching period between the two adjacent time domain units if one time domain unit of the two adjacent time domain units belongs to the first type of time domain unit and the other time domain unit of the two adjacent time domain units belongs to the second type of time domain unit, and the switching period is used for performing switching between uplink transmission and downlink transmission; and determine that there is no switching period between the two adjacent time domain units if both the two adjacent time domain units belong to the first type of time domain unit or the second type of time domain unit.

In some embodiments, the time domain unit is a subframe, a slot, a subslot or a symbol.

In some embodiments, the multiple carriers are used for communication between the terminal device and the network device, and the multiple carriers correspond to a unified uplink radio frequency filter and a unified uplink antenna system on the network device side.

Those skilled in the art should understand that the related description of the above-described apparatus for determining the configuration according to the embodiment of the present disclosure may be understood with reference to the related description of the method for determining the configuration according to the embodiments of the present disclosure.

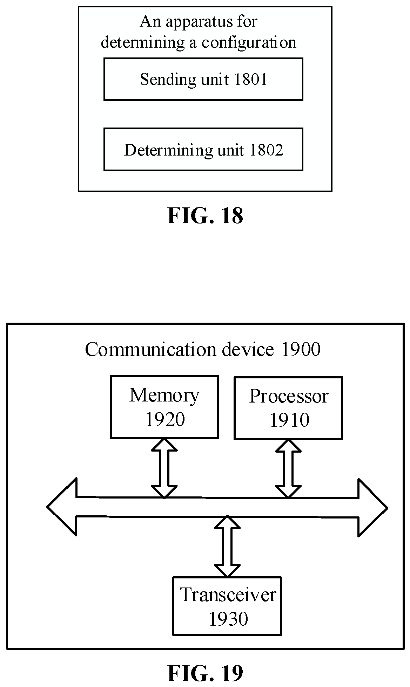

FIG. 18 is the fourth schematic diagram of the structure and composition of the apparatus for determining a configuration according to an embodiment of the present disclosure. The apparatus is applied to a network device. As illustrated in FIG. 18, the apparatus for determining the configuration includes a sending unit 1801.

The sending unit 1801 is configured to send the first configuration and/or the second configuration to a terminal device. The first configuration is used for the terminal device to operate on a carrier corresponding to the first type of time domain unit, and/or the second configuration is used for the terminal device to operate on the carrier corresponding to the second type of time domain unit, the carrier corresponding to the first type of time domain unit is configured with uplink subband(s), the carrier corresponding to the second type of time domain unit is not configured with the uplink subband(s), the first type of time domain unit includes a downlink time domain unit and/or a flexible time domain unit, the second type of time domain unit includes a downlink time domain unit and/or a flexible time domain unit, and the carrier is any one of multiple carriers.

In some embodiments, the first configuration includes at least one of following: the first uplink power configuration, the first CSI reporting configuration, or the first spatial relation configuration.

In some embodiments, the first uplink power configuration includes at least one of following parameters: the first target received power or the first open-loop power adjustment amount.

In some embodiments, the first CSI reporting configuration includes at least one of following parameter: the first antenna port, the first signal sending power, or the first number of antenna panels.

In some embodiments, the second configuration includes at least one of following: the second uplink power configuration, the second CSI reporting configuration, or the second spatial relation configuration.

In some embodiments, the second uplink power configuration includes at least one of following parameters: the second target received power or the second open-loop power adjustment amount.

In some embodiments, the second CSI reporting configuration includes at least one of following parameters: the second antenna port, the second signal sending power, or the second number of antenna panels.

In some embodiments, the apparatus further includes a determining unit 1802. The determining unit 1802 is configured to determine that there is a switching period between the two adjacent time domain units if one time domain unit of the two adjacent time domain units belongs to the first type of time domain unit and the other time domain unit of the two adjacent time domain units belongs to the second type of time domain unit, and the switching period is used for performing switching between uplink transmission and downlink transmission; and if both the two adjacent time domain units belong to the first type of time domain unit or the second type of time domain unit, determine that there is no switching period between the two adjacent time domain units.

In some embodiments, the time domain unit is a subframe, a slot, a subslot or a symbol.

In some embodiments, the multiple carriers are used for communication between the terminal device and the network device, and each carrier of the multiple carriers corresponds to an independent uplink radio frequency filter and an independent uplink antenna system on the network device side.

Those skilled in the art should understand that the related description of the above-described apparatus for determining the configuration according to the embodiment of the present disclosure may be understood with reference to the related description of the method for determining the configuration according to the embodiments of the present disclosure.

FIG. 19 is a schematic structural diagram of a communication device 1900 according to an embodiment of the present disclosure. The communication device may be a terminal device or a network device. The communication device 1900 illustrated in FIG. 19 includes a processor 1910. The processor 1910 may be configured to invoke and execute a computer program from a memory to implement the methods in the embodiments of the present disclosure.

Alternatively, as illustrated in FIG. 19, the communication device 1900 may further include a memory 1920. The processor 1910 may invoke and execute a computer program from the memory 1920 to implement the methods in the embodiments of the present disclosure.

The memory 1920 may be a separate device independent of the processor 1910 or may be integrated in the processor 1910.

Alternatively, as illustrated in FIG. 19, the communication device 1900 may further include a transceiver 1930, and the processor 1910 may control the transceiver 1930 to communicate with other devices, specifically, may send information or data to other devices, or receive information or data sent by other devices.

Here, the transceiver 1930 may include a transmitter and a receiver. The transceiver 1930 may further include one or more antennas.

Alternatively, the communication device 1900 may specifically be a terminal device according to the embodiments of the present disclosure, and the communication device 1900 may implement corresponding processes implemented by the terminal device in each method according to the embodiments of the present disclosure, which will not be described herein for the sake of brevity. In some embodiments, the processor 1910 in the communication device 1900 corresponds to the determining unit 1501 in FIG. 15, and is configured to implement the function of the determining unit 1501. The transceiver 1930 in the communication device 1900 corresponds to the sending unit 1502 in FIG. 15, and is used to implement the function of the sending unit 1502. In another embodiment, the processor 1910 in the communication device 1900 corresponds to the determining unit 1601 in FIG. 16, and is used to implement the function of the determining unit 1601. The transceiver 1930 in the communication device 1900 corresponds to the sending unit 1602 in FIG. 16, and is used to implement the function of the transmission unit 1602.

Alternatively, the communication device 1900 may be a network device according to the embodiments of the present disclosure, and the communication device 1900 may implement corresponding processes implemented by the network device in each method according to the embodiments of the present disclosure, which will not be described herein for the sake of conciseness. In some embodiments, the processor 1910 in the communication device 1900 corresponds to the determining unit 1702 in FIG. 17, and is configured to implement the function of the determining unit 1702. The transceiver 1930 in the communication device 1900 corresponds to the sending unit 1701 in FIG. 17, and is configured to implement the function of the sending unit 1701. In other embodiments, the processor 1910 in the communication device 1900 corresponds to the determining unit 1802 in FIG. 18, and is configured to implement the function of the determining unit 1802. The transceiver 1930 in the communication device 1900 corresponds to the sending unit 1801 in FIG. 18, and is configured to implement the function of the sending unit 1801.

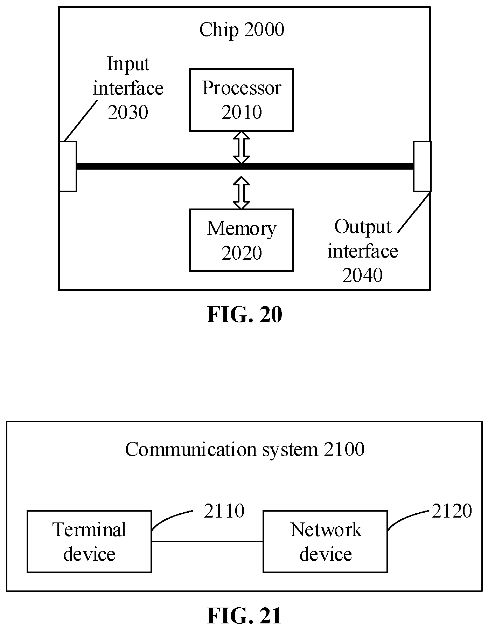

FIG. 20 is a schematic structural diagram of a chip according to an embodiment of the present disclosure. The chip 2000 illustrated in FIG. 20 includes a processor 2010, and the processor 2010 may be configured to invoke and execute a computer program from a memory to implement the methods in the embodiments of the present disclosure.

Alternatively, as illustrated in FIG. 20, the chip 2000 may further include a memory 2020. The processor 2010 may invoke and execute a computer program from the memory 2020 to implement the methods in the embodiments of the present disclosure.

Here, the memory 2020 may be a separate device independent of the processor 2010 or may be integrated in the processor 2010.

Alternatively, the chip 2000 may further include an input interface 2030. Here, the processor 2010 may control the input interface 2030 to communicate with other devices or chips, specifically, may acquire information or data sent by other devices or chips.

Alternatively, the chip 2000 may further include an output interface 2040. The processor 2010 may control the output interface 2040 to communicate with other devices or chips, specifically, may output information or data to other devices or chips.

Alternatively, the chip may be applied to the network device in the embodiment of the present disclosure, and the chip may implement the corresponding process implemented by the network device in each method of the embodiments of the present disclosure, which will not be repeated here for the sake of brevity.

Alternatively, the chip may be applied to the terminal device in the embodiments of the present disclosure, and the chip may implement the corresponding process implemented by the terminal device in each method of the embodiments of the present disclosure, which will not be repeated here for the sake of brevity.

It should be understood that the chip mentioned in the embodiments of the present disclosure may also be referred to as a symbol level chip, symbol chip, chip symbol, system-on-chip.

FIG. 21 is a schematic block diagram of a communication system 2100 according to an embodiment of the present disclosure. As illustrated in FIG. 21, the communication system 2100 includes a terminal device 2110 and a network device 2120.

Here, the terminal device 2110 may be configured to implement the corresponding functions implemented by the terminal device in the above-described method, and the network device 2120 may be configured to implement the corresponding functions implemented by the network device in the above-described method, which will not be described herein for the sake of brevity.

It should be understood that the processor of the embodiments of the present disclosure may be an integrated circuit chip having signal processing capabilities. In the implementation process, the operations of the above-described method embodiments may be completed by integrated logic circuits of hardware in the processor or instructions in the form of software. The processor described above may be a general-purpose processor, a Digital Signal Processor (DSP), an Application Specific Integrated Circuit (ASIC), a Field Programmable Gate Array (FPGA) or other programmable logic device, a discrete gate or transistor logic device, or a discrete hardware component, to implement or execute the methods, operations and logical block diagrams disclosed in the embodiments of the present disclosure. The methods, operations, and logical block diagrams disclosed in the embodiments of the present disclosure may be implemented or executed. The general purpose processor may be a microprocessor or the processor may be any conventional processor or the like. The operations of the method disclosed in connection with the embodiments of the present disclosure may be directly be executed by the hardware decoding processor, or may be executed by combining hardware and software modules in the decoding processor. The software module may be provided in a storage medium mature in the art, such as a random access memory, a flash memory, a read-only memory, a programmable read-only memory, or an electrically erasable programmable memory, a register, etc. The storage medium is arranged in the memory, and the processor reads the information in the memory, and completes the operations of the above methods in combination with the hardware thereof.

It is understood that the memory in the embodiments of the present disclosure may be a volatile memory or a non-volatile memory, or may include both volatile and non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which serves as an external cache. By way of illustration, but not limitation, many forms of RAM are available, such as a static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It should be noted that the memory of the systems and methods described herein is intended to include, but is not limited to, these and any other suitable type of memory.

It should be understood that the above memory is illustrative but is not limited thereto. For example, the memory in the embodiments of the present disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch link DRAM (SLDRAM) and a Direct Rambus RAM (DR RAM), and the like. That is, the memory in the embodiments of the present disclosure is intended to include, but is not limited to, these and any other suitable type of memory.

The embodiments of the present disclosure further provide a computer-readable storage medium for storing a computer program.

Alternatively, the computer-readable storage medium may be applied to the network device in the embodiments of the present disclosure, and the computer program causes the computer to execute the flows implemented by the network device in each method in the embodiments of the present disclosure, and the flows are not repeatedly described herein for the sake of brevity.

Alternatively, the computer-readable storage medium may be applied to the terminal device in the embodiments of the present disclosure, and the computer program causes the computer to execute the flows implemented by the terminal device in each method of the embodiments of the present disclosure, and the flows are not repeatedly described herein for the sake of brevity.

The embodiments of the present disclosure further provide a computer program product including computer program instructions.

Alternatively, the computer program product may be applied to the network device in the embodiments of the present disclosure, and the computer program instructions cause the computer to execute the flows implemented by the network device in each method in the embodiments of the present disclosure, and the description of the flows is not repeated here for the sake of brevity.

Alternatively, the computer program product may be applied to the terminal device in the embodiments of the present disclosure, and the computer program instructions cause the computer to execute the flows implemented by the terminal device in each method of the embodiments of the present disclosure, and the description of the flows is not repeated here for the sake of brevity.

The embodiments of the present disclosure further provide a computer program.

Alternatively, the computer program may be applied to the network device in the embodiments of the present disclosure, and the computer program, when run on the computer, enables the computer to execute the flows implemented by the network device in each method of the embodiments of the present disclosure, and the description of the flows is not repeated here for the sake of brevity.

Alternatively, the computer program may be applied to the terminal device in the embodiments of the present disclosure, and the computer program, when run on the computer, enables the computer to execute the flows implemented by the terminal device in each method of the embodiments of the present disclosure, and the description of the flows is not repeated here for the sake of brevity.

Those of ordinary skill in the art will appreciate that the elements and algorithmic steps of the various examples described in connection with the embodiments disclosed herein may be implemented in electronic hardware, or a combination of computer software and electronic hardware. Whether these functions are executed in hardware or software depends on the specific application and design constraints of the technical solution. Those skilled in the art may use different methods for implementing the described functions for each particular application, but such implementations should not be considered beyond the scope of the present disclosure.

Those skilled in the art may clearly understand that, for convenience and brevity of the description, regarding the specific operation processes of the systems, devices, and units described above, reference may be made to the corresponding processes in the aforementioned method embodiments, and the specific operation processes of the systems, devices, and units described above are not repeated here.

In several embodiments provided herein, it should be understood that the disclosed systems, apparatuses, and methods may be implemented in other ways. For example, the apparatuses embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection shown or discussed may be an indirect coupling or communication connection through some interface, device or unit, which may be electrical, mechanical or otherwise.

The units described as separate units may or may not be physically separate, and the units displayed as units may or may not be physical units, that is, the units may be located at one place or may be distributed over multiple network units. Some or all of the units may be selected according to actual needs to achieve the purpose of the solutions of the present embodiment.

In addition, various functional units in each embodiment of the present disclosure may be integrated in one processing unit, each unit may be physically present alone, or two or more units may be integrated in one unit.

The functions may be stored in a computer-readable storage medium if implemented in the form of software functional units and sold or used as independent products. Based on this understanding, the technical solution of the present disclosure essentially or a part of the technical solution that contributes to the prior art or a part of the technical solution may be embodied in the form of a software product, the computer software product is stored in a storage medium, includes several instructions for causing a computer device (which may be a personal computer, server, or network device, etc.) to perform all or a part of the operations of the methods described in various embodiments of the present disclosure. The storage medium includes a USB disk, a removable hard disk, a Read-Only Memory (ROM), a Random Access Memory (RAM), a magnetic disk, or an optical disk or a medium capable of storing program codes.

The foregoing is merely a specific embodiment of the present disclosure, but the scope of protection of the present disclosure is not limited thereto, and changes or substitutions easily conceived by any person skilled in the art within the technical scope disclosed in the present disclosure should be covered within the scope of protection of the present disclosure. Therefore, the scope of protection of the present disclosure should be subject to the scope of protection of the claims.

## Claims

1. A method for determining a configuration, comprising:
determining, by a terminal device, to operate, by using a first configuration, on a band combination corresponding to a first type of time domain unit, and/or to operate, by using a second configuration, on the band combination corresponding to a second type of time domain unit, wherein the band combination corresponding to the first type of time domain unit is configured with uplink subband(s), the band combination corresponding to the second type of time domain unit is not configured with the uplink subband(s), the first type of time domain unit comprises a downlink time domain unit and/or a flexible time domain unit, the second type of time domain unit comprises a downlink time domain unit and/or a flexible time domain unit, and the band combination comprises a plurality of carriers.

2. The method of claim 1, further comprising:
if at least one carrier in the band combination corresponding to the first type of time domain unit is configured with the uplink subband(s), determining, by the terminal device, that the band combination corresponding to the first type of time domain unit is configured with the uplink subband(s); and/or
if all carriers in the band combination corresponding to the second type of time domain unit are not configured with the uplink subband(s), determining, by the terminal device, that the band combination corresponding to the second type of time domain unit is not configured with the uplink subband(s).

3. The method of claim 1 or 2, wherein in a case that a number of carriers configured with the uplink subbands in the band combination corresponding to the first type of time domain unit is greater than one, the carriers configured with the uplink subbands in the band combination corresponding to the first type of time domain unit are continuous.

4. The method of any one of claims 1 to 3, wherein determining, by the terminal device, to operate, by using the first configuration, on the band combination corresponding to the first type of time domain unit, and/or to operate, by using the second configuration, on the band combination corresponding to the second type of time domain unit comprises:
determining, by the terminal device, to operate, by using the first configuration, on respective carriers in the band combination corresponding to the first type of time domain unit, and/or determining, by the terminal device, to operate, by using the second configuration, on respective carriers in the band combination corresponding to the second type of time domain unit.

5. The method of any one of claims 1 to 4, wherein the first configuration comprises at least one of following: a first uplink power configuration, a first Channel State Information (CSI) reporting configuration, or a first spatial relation configuration.

6. The method of claim 5, wherein the first uplink power configuration comprises at least one of following parameters: a first target received power or a first open-loop power adjustment amount.

7. The method of claim 5 or 6, wherein the first CSI reporting configuration comprises at least one of following parameters: a first antenna port, a first signal sending power, or a first number of antenna panels.

8. The method of any one of claims 1 to 7, wherein the second configuration comprises at least one of following: a second uplink power configuration, a second CSI reporting configuration, or a second spatial relation configuration.

9. The method of claim 8, wherein the second uplink power configuration comprises at least one of following parameters: a second target received power or a second open-loop power adjustment amount.

10. The method of claim 8 or 9, wherein the second CSI reporting configuration comprises at least one of following parameters: a second antenna port, a second signal sending power, or a second number of antenna panels.

11. The method of any one of claims 1 to 10, further comprising:
if one time domain unit of two adjacent time domain units belongs to the first type of time domain unit and other time domain unit of the two adjacent time domain units belongs to the second type of time domain unit, determining, by the terminal device, that a switching period presents between the two adjacent time domain units, wherein the switching period is used for performing switching between uplink transmission and downlink transmission; and
if both the two adjacent time domain units belong to the first type of time domain unit or the second type of time domain unit, determining, by the terminal device, that the switching period does not present between the two adjacent time domain units.

12. The method of any one of claims 1 to 11, wherein the plurality of carriers are used for communication between the terminal device and a network device, and the plurality of carriers correspond to a unified uplink radio frequency filter and a unified uplink antenna system.

13. A method for determining a configuration, comprising:
determining, by a terminal device, to operate, by using a first configuration, on a carrier corresponding to a first type of time domain unit, and/or to operate, by using a second configuration, on the carrier corresponding to a second type of time domain unit, the carrier corresponding to the first type of time domain unit is configured with uplink subband(s), the carrier corresponding to the second type of time domain unit is not configured with the uplink subband(s), the first type of time domain unit comprises a downlink time domain unit and/or a flexible time domain unit, the second type of time domain unit comprises a downlink time domain unit and/or a flexible time domain unit, and the carrier is any one of a plurality of carriers.

14. The method of claim 13, wherein the first configuration comprises at least one of following: a first uplink power configuration, a first Channel State Information (CSI) reporting configuration, or a first spatial relation configuration.

15. The method of claim 14, wherein the first uplink power configuration comprises at least one of following parameters: a first target received power or a first open-loop power adjustment amount.

16. The method of claim 14 or 15, wherein the first CSI reporting configuration comprises at least one of following parameters: a first antenna port, a first signal sending power, or a first number of antenna panels.

17. The method of any one of claims 13 to 16, wherein the second configuration comprises at least one of following: a second uplink power configuration, a second CSI reporting configuration, or a second spatial relation configuration.

18. The method of claim 17, wherein the second uplink power configuration comprises at least one following parameters: a second target received power or a second open-loop power adjustment amount.

19. The method of claim 17 or 18, wherein the second CSI reporting configuration comprises at least one of following parameters: a second antenna port, a second signal sending power, or a second number of antenna panels.

20. The method of any one of claims 1 to 19, further comprising:
if one time domain unit of two adjacent time domain units belongs to the first type of time domain unit and other time domain unit of the two adjacent time domain units belongs to the second type of time domain unit, determining, by the terminal device, that a switching period presents between the two adjacent time domain units, wherein the switching period is used for performing switching between uplink transmission and downlink transmission; and
if both the two adjacent time domain units belong to the first type of time domain unit or the second type of time domain unit, determining, by the terminal device, that the switching period does not present between the two adjacent time domain units.

21. The method of any one of claims 13 to 20, wherein the plurality of carriers are used for communication between the terminal device and a network device, and each carrier of the plurality of carriers corresponds to an independent uplink radio frequency filter and an independent uplink antenna system.

22. A method for determining a configuration, comprising:
sending, by a network device, a first configuration and/or a second configuration to a terminal device, wherein the first configuration is used for the terminal device to operate on a band combination corresponding to a first type of time domain unit, the second configuration is used for the terminal device to operate on the band combination corresponding to a second type of time domain unit, the band combination corresponding to the first type of time domain unit is configured with uplink subband(s), the band combination corresponding to the second type of time domain unit is not configured with the uplink subband(s), the first type of time domain unit comprises a downlink time domain unit and/or a flexible time domain unit, the second type of time domain unit comprises a downlink time domain unit and/or a flexible time domain unit, and the band combination comprises a plurality of carriers.

23. The method of claim 22, wherein
if at least one carrier in the band combination corresponding to the first type of time domain unit is configured with the uplink subband(s), the band combination corresponding to the first type of time domain unit is configured with the uplink subband(s); and/or
if all carriers in the band combination corresponding to the second type of time domain unit are not configured with the uplink subband(s), the band combination corresponding to the second type of time domain unit is not configured with the uplink subband(s).

24. The method of claim 22 or 23, wherein in a case that a number of carriers configured with the uplink subbands in the band combination corresponding to the first type of time domain unit is greater than one, the carriers configured with the uplink subbands in the band combination corresponding to the first type of time domain unit are continuous.

25. The method of any one of claims 22 to 23, wherein the first configuration comprises at least one of following: a first uplink power configuration, a first Channel State Information (CSI) reporting configuration, or a first spatial relation configuration.

26. The method of claim 25, wherein the first uplink power configuration comprises at least one of following parameters: a first target received power or a first open-loop power adjustment amount.

27. The method of claim 25 or 26, wherein the first CSI reporting configuration comprises at least one of following parameters: a first antenna port, a first signal sending power, or a first number of antenna panels.

28. The method of any one of claims 22 to 27, wherein the second configuration comprises at least one of following: a second uplink power configuration, a second CSI reporting configuration, or a second spatial relation configuration.

29. The method of claim 28, wherein the second uplink power configuration comprises at least one of following parameters: a second target received power or a second open-loop power adjustment amount.

30. The method of claim 28 or 29, wherein the second CSI reporting configuration comprises at least one of following parameters: a second antenna port, a second signal sending power, or a second number of antenna panels.

31. The method of any one of claims 22 to 30, further comprising:
if one time domain unit of two adjacent time domain units belongs to the first type of time domain unit and other time domain unit of the two adjacent time domain units belongs to the second type of time domain unit, determining, by the network device, that a switching period presents between the two adjacent time domain units, wherein the switching period is used for performing switching between uplink transmission and downlink transmission; and
if both the two adjacent time domain units belong to the first type of time domain unit or the second type of time domain unit, determining, by the network device, that the switching period does not present between the two adjacent time domain units.

32. The method of any one of claims 22 to 31, wherein the plurality of carriers are used for communication between the terminal device and the network device, and the plurality of carriers correspond to a unified uplink radio frequency filter and a unified uplink antenna system.

33. A method for determining a configuration, comprising:
sending, by a network device, a first configuration and/or a second configuration to a terminal device, wherein the first configuration is used for the terminal device to operate on a carrier corresponding to a first type of time domain unit, and/or the second configuration is used for the terminal device to operate on the carrier corresponding to a second type of time domain unit, the carrier corresponding to the first type of time domain unit is configured with uplink subband(s), the carrier corresponding to the second type of time domain unit is not configured with the uplink subband(s), the first type of time domain unit comprises a downlink time domain unit and/or a flexible time domain unit, the second type of time domain unit comprises a downlink time domain unit and/or a flexible time domain unit, and the carrier is any one of a plurality of carriers.

34. The method of claim 33, wherein the first configuration comprises at least one of following: a first uplink power configuration, a first Channel State Information (CSI) reporting configuration, or a first spatial relation configuration.

35. The method of claim 34, wherein the first uplink power configuration comprises at least one of following parameters: a first target received power or a first open-loop power adjustment amount.

36. The method of claim 34 or 35, wherein the first CSI reporting configuration comprises at least one of following parameters: a first antenna port, a first signal sending power, or a first number of antenna panels.

37. The method of any one of claims 33 to 36, wherein the second configuration comprises at least one of following: a second uplink power configuration, a second CSI reporting configuration, or a second spatial relation configuration.

38. The method of claim 37, wherein the second uplink power configuration comprises at least one following parameter: a second target received power or a second open-loop power adjustment amount.

39. The method of claim 37 or 38, wherein the second CSI reporting configuration comprises at least one following parameter: a second antenna port, a second signal sending power, or a second number of antenna panels.

40. The method of any one of claims 33 to 39, further comprising:
if one time domain unit of two adjacent time domain units belongs to the first type of time domain unit and other time domain unit of the two adjacent time domain units belongs to the second type of time domain unit, determining, by the network device, that a switching period presents between the two adjacent time domain units, wherein the switching period is used for performing switching between uplink transmission and downlink transmission; and
if both the two adjacent time domain units belong to the first type of time domain unit or the second type of time domain unit, determining, by the network device, that the switching period does not present between the two adjacent time domain units.

41. The method of any one of claims 33 to 40, wherein the plurality of carriers are used for communication between the terminal device and the network device, and each carrier of the plurality of carriers corresponds to an independent uplink radio frequency filter and an independent uplink antenna system.

42. An apparatus for determining a configuration, applied to a terminal device, the apparatus comprising:
a determining unit, configured to determine to operate, by using a first configuration, on a band combination corresponding to a first type of time domain unit, and/or to operate, by using a second configuration, on the band combination corresponding to a second type of time domain unit, wherein the band combination corresponding to the first type of time domain unit is configured with uplink subband(s), the band combination corresponding to the second type of time domain unit is not configured with the uplink subband(s), the first type of time domain unit comprises a downlink time domain unit and/or a flexible time domain unit, the second type of time domain unit comprises a downlink time domain unit and/or a flexible time domain unit, and the band combination comprises a plurality of carriers.

43. An apparatus for determining a configuration, applied to a terminal device, the apparatus comprising:
a determining unit, configured to determine, to operate, by using a first configuration, on a carrier corresponding to a first type of time domain unit, and/or to operate, by using a second configuration, on the carrier corresponding to the second type of time domain unit, the carrier corresponding to the first type of time domain unit is configured with uplink subband(s), the carrier corresponding to the second type of time domain unit is not configured with the uplink subband(s), the first type of time domain unit comprises a downlink time domain unit and/or a flexible time domain unit, the second type of time domain unit comprises a downlink time domain unit and/or a flexible time domain unit, and the carrier is any one of a plurality of carriers.

44. An apparatus for determining a configuration, applied to a network device, the apparatus comprising:
a sending unit, configured to send a first configuration and/or a second configuration to a terminal device, wherein the first configuration is used for the terminal device to operate on a band combination corresponding to a first type of time domain unit, the second configuration is used for the terminal device to operate on the band combination corresponding to a second type of time domain unit, the band combination corresponding to the first type of time domain unit is configured with uplink subband(s), the band combination corresponding to the second type of time domain unit is not configured with the uplink subband(s), the first type of time domain unit comprises a downlink time domain unit and/or a flexible time domain unit, the second type of time domain unit comprises a downlink time domain unit and/or a flexible time domain unit, and the band combination comprises a plurality of carriers.

45. An apparatus for determining a configuration, applied to a network device, the apparatus comprising:
a sending unit, configured to send a first configuration and/or a second configuration to a terminal device, wherein the first configuration is used for the terminal device to operate on a carrier corresponding to a first type of time domain unit, and/or the second configuration is used for the terminal device to operate on the carrier corresponding to a second type of time domain unit, the carrier corresponding to the first type of time domain unit is configured with uplink subband(s), the carrier corresponding to the second type of time domain unit is not configured with the uplink subband(s), the first type of time domain unit comprises a downlink time domain unit and/or a flexible time domain unit, the second type of time domain unit comprises a downlink time domain unit and/or a flexible time domain unit, and the carrier is any one of a plurality of carriers.

46. A terminal device comprising: a processor and a memory, wherein the memory is configured to store a computer program and the processor is configured to invoke and execute the computer program stored in the memory to cause the network device to perform the method of any one of claims 22 to 41.

47. A network device comprising: a processor and a memory, wherein the memory is configured to store a computer program and the processor is configured to invoke and execute the computer program stored in the memory to cause the terminal device to perform the method of any one of claims 1 to 21.

48. A chip comprising: a processor for invoking and executing a computer program from a memory to cause a device on which the chip is mounted to perform the method of any one of claims 1 to 41.

49. A computer readable storage medium for storing a computer program that causes a computer to perform the method of any one of claims 1 to 41.

50. A computer program product comprising computer program instructions that cause a computer to perform the method of any one of claims 1 to 41.

51. A computer program that causes a computer to perform the method of any one of claims 1 to 41.
